# EUROPEAN PATENT APPLICATION

(11) **EP 4 436 254 A1**
(43) Date of publication of application: **25.09.2024**
(21) Application number: 22903572.0
(22) Date of filing: 08.12.2022
(51) Int. Cl.: H04W 36/00

(54) **NETWORK ACCESS METHOD AND COMMUNICATION APPARATUS**

(30) Priority: 08.12.2021 CN 202111489714
(71) Applicant: Huawei Technologies Co., Ltd., Shenzhen, Guangdong 518129 (CN)
(72) Inventor: XU, Yishan, Shenzhen, Guangdong 518129 (CN); ZHU, Fangyuan, Shenzhen, Guangdong 518129 (CN); SHU, Lin, 518129 Munich (DE); ZHU, Hualin, Shenzhen, Guangdong 518129 (CN)
(74) Representative: Gill Jennings & Every LLP
(86) International application number: PCT/CN2022/137548
(87) International publication number: WO 2023/104153

(57) **Abstract**

This application provides a network access method. The method includes: obtaining location information corresponding to a service subscribed to by a first terminal device; obtaining a location of the first terminal device; determining, based on the location of the first terminal device and the location information, that the first terminal device is located in an area indicated by the location information; and sending first indication information to the first terminal device, where the first indication information indicates to access a hosting network, and the hosting network is used to provide the first terminal device with a connection for obtaining the service. According to the method, when it is determined that a terminal device is located in an area indicated by location information corresponding to a service, the terminal device is indicated to access a hosting network, so that the terminal device accesses the hosting network and obtains the service.

## Description

### CROSS-REFERENCE TO RELATED APPLICATIONS

This application claims priority to Chinese Patent Application No. 202111489714.X, filed with the China National Intellectual Property Administration on December 8, 2021 and entitled "NETWORK ACCESS METHOD AND COMMUNICATION APPARATUS", which is incorporated herein by reference in its entirety.

### TECHNICAL FIELD

This application relates to the field of communication technologies, and in particular, to a network access method and a communication apparatus.

### BACKGROUND

A localized service (localized service) may be obtained at a specific geographical location and/or within specific time, while a hosting network (hosting network) provides a connection for obtaining the localized service, and an operator of the hosting network, an operator of a home network, or a third-party service operator provides the localized service. The hosting network may be a non-public network (non-public network, NPN) or a public land mobile network (public land mobile network, PLMN), and the network may provide coverage at a specific geographical location and/or within specific time. Currently, there is no solution of how to access the hosting network.

### SUMMARY

This application provides a network access method, to access a hosting network.

According to a first aspect, this application provides a network access method. The method includes: obtaining location information corresponding to a service subscribed to by a first terminal device; obtaining a location of the first terminal device; determining, based on the location of the first terminal device and the location information, that the first terminal device is located in an area indicated by the location information; and sending indication information #1 to the first terminal device, where the indication information #1 indicates to access a hosting network, and the hosting network is used to provide the first terminal device with a connection for obtaining the service.

According to the method, when it is determined, based on a location of a terminal device, that the terminal device is located in an area indicated by location information corresponding to a service, the terminal device is indicated to access a hosting network, so that the terminal device accesses the hosting network and obtains the service.

According to a second aspect, this application provides a network access method. The method includes: receiving second indication information, where the second indication information indicates that a first terminal device is located in an area indicated by location information corresponding to a service subscribed to by the first terminal device; and sending first indication information to the first terminal device, where the first indication information indicates to access a hosting network, and the hosting network is used to provide the first terminal device with a connection for obtaining the service.

According to the method, when information indicating that a terminal device is located in an area indicated by location information corresponding to a service is received, the terminal device is indicated to access a hosting network, so that the terminal device accesses the hosting network and obtains the service.

In a possible implementation, the method further includes: sending, to an access management function entity, a notification of subscribing to an event that the first terminal is located in the area indicated by the location information; and the receiving second indication information includes: receiving the second indication information from the access management function entity. In this implementation, the event that the first terminal device enters the area indicated by the location information is subscribed to from the access management function entity, and the access management function entity initiates, based on the event, a positioning procedure on the first terminal device, or indicates the first terminal device to initiate a positioning procedure, to learn whether the first terminal device is located in the area indicated by the location information. When the first terminal device is located in the area indicated by the location information, the access management function entity notifies the event to a device that subscribes to the event, to learn that the first terminal device is located in the area indicated by the location information.

In a possible implementation, the method further includes: sending, to the first terminal device, information that indicates to perform reporting when the area indicated by the location information is entered; and the receiving second indication information includes: receiving the second indication information from the first terminal device.

According to a third aspect, this application provides a network access method. The method includes: receiving second indication information, where the second indication information indicates that a first terminal device leaves a first registration area, and the first registration area is an area outside an area indicated by location information corresponding to a service subscribed to by the first terminal device; and sending first indication information to the first terminal device, where the first indication information indicates to access a hosting network, and the hosting network is used to provide the first terminal device with a connection for obtaining the service.

According to the method, when information indicating that a terminal device leaves the first registration area (which means that the terminal device is located in an area indicated by location information) is received, the terminal device is indicated to access a hosting network, so that the terminal device accesses the hosting network and obtains the service.

In a possible implementation, the method further includes: subscribing to, from an access management function entity, a notification of an event that the first terminal device leaves the first registration area; and the receiving second indication information includes: receiving the second indication information from the access management function entity. In this implementation, the notification of the event that the first terminal device leaves the first registration area is subscribed to from the access management function entity. When the first terminal device leaves the first registration area, the first terminal device initiates mobility registration, so that the access management function entity learns that the first terminal device leaves the first registration area. Further, the access management function entity notifies the event to a device that subscribes to the event, to learn that the first terminal device leaves the first registration area.

In a possible implementation, the method further includes: updating a registration area of the first terminal device, that is, updating the registration area of the first terminal device to the first registration area.

In a possible implementation, the method further includes: sending the location information to the access management function entity, to update the registration area of the first terminal device based on the location information.

In a possible implementation, the method further includes: determining the first registration area based on the location information; and sending the first registration area to the access management function entity, to update the registration area of the first terminal device.

According to a fourth aspect, this application provides a network access method. The method includes: receiving second indication information, where the second indication information indicates that a first terminal device receives network information of an area indicated by location information, and the location information corresponds to a service subscribed to by the first terminal device; and sending first indication information to the first terminal device, where the first indication information indicates to access a hosting network, and the hosting network is used to provide the first terminal device with a connection for obtaining the service.

According to the method, when information indicating that a terminal device receives network information of an area indicated by location information (which means that the terminal device is located in the area indicated by the location information) is received, the terminal device is indicated to access a hosting network, so that the terminal device accesses the hosting network and obtains the service.

In a possible implementation of any method in the first aspect to the fourth aspect, the method further includes: subscribing to, from the access management function entity, a notification of an event that the first terminal device receives the network information; and the receiving second indication information includes: receiving the second indication information from the access management function entity. In this implementation, the notification of the event that the first terminal device receives the network information is subscribed to from the access management function entity. After accepting the subscription, the access management function entity indicates the first terminal device to perform reporting after receiving the network information. After receiving the network information, the first terminal device performs reporting to the access management function entity. Then, the access management function entity notifies the event to a device that subscribes to the event, to learn that the first terminal device receives the network information.

In a possible implementation of any method in the first aspect to the fourth aspect, the method further includes: sending, to the first terminal device, information indicating to perform reporting after the network information is received; and the receiving second indication information includes: receiving the second indication information from the first terminal device.

In a possible implementation of any method in the first aspect to the fourth aspect, the network information includes one or more of the following: the closed access group identifier, the group identifier for network selection, the cell identifier, the tracking area identifier, the slice identifier, the network identifier, or the data network name.

In a possible implementation of any method in the first aspect to the fourth aspect, the location information includes one or more of the following: the coordinate value, the longitude and latitude, the closed access group identifier, the group identifier for network selection, the cell identifier, the tracking area identifier, the slice identifier, the network identifier, or the data network name.

In a possible implementation of any method in the first aspect to the fourth aspect, before the sending first indication information to the first terminal device, the method further includes: determining to be within the time indicated by the time information corresponding to the service.

In a possible implementation of any method in the first aspect to the fourth aspect, the determining to be within the time indicated by the time information corresponding to the service includes: determining, based on a timer, to be within the time indicated by the time information.

In a possible implementation of any method in the first aspect to the fourth aspect, the method further includes: obtaining the time information.

In a possible implementation of any method in the first aspect to the fourth aspect, the time information includes one or more of the following: the start moment, the time period, or the end moment of the service.

In a possible implementation of any method in the first aspect to the fourth aspect, the sending first indication information to the first terminal device includes: sending a first network selection list to the first terminal device, where the first network selection list includes the first indication information; or sending a second network selection list and the first indication information to the first terminal device. In this implementation, the first network selection list including the first indication information is sent to the first terminal device, or the second network selection list and the first indication information is sent to the first terminal device, to send the first indication information to the first terminal device. The first network selection list may be a network selection list newly created in this application, and the second network selection list may be a network selection list currently provided by a network for the terminal device.

In a possible implementation of any method in the first aspect to the fourth aspect, the first network selection list further includes an identifier of the hosting network, and the second network selection list includes the identifier of the hosting network. In this implementation, the network selection list including the identifier of the hosting network is sent to the first terminal device, so that the first terminal device accesses the hosting network.

In a possible implementation of any method in the first aspect to the fourth aspect, the hosting network has a highest priority in the first network selection list, and the hosting network has a highest priority in the second network selection list. In this implementation, the priority of the hosting network in the network selection list is set to the highest, so that the first terminal device accesses the hosting network.

It may be understood that, in the foregoing three possible implementations, a function of the first indication information may be replaced with indicating to perform network selection based on the first network selection list or the second network selection list when the first indication information is received.

In a possible implementation of any method in the first aspect to the fourth aspect, the method further includes: determining that the first terminal device subscribes to the service.

In a possible implementation of any method in the first aspect to the fourth aspect, the determining that the first terminal device subscribes to the service includes: determining, based on subscription information of the first terminal device, that the first terminal device subscribes to the service; receiving, from an application function entity, information indicating that the first terminal device subscribes to the service; or obtaining a list of terminal devices that subscribe to the service, where the list of terminal devices includes the first terminal device.

In a possible implementation of any method in the first aspect to the fourth aspect, the method further includes: sending third indication information to an access network device, where the third indication information indicates to broadcast an identifier of the service; receiving, from the access network device or the access management function entity, a list of terminal devices that subscribe to the service, where the list of terminal devices includes the first terminal device; and determining, based on the list of terminal devices, that the first terminal device subscribes to the service.

In a possible implementation of any method in the first aspect to the fourth aspect, the method further includes: if a home or visited network of the first terminal device is a public network and the hosting network is a standalone non-public network, sending fourth indication information to the first terminal device, where the fourth indication information indicates to enter a non-public network access mode or exit a public network access mode; or if a home or visited network of the first terminal device is a standalone non-public network and the hosting network is a public network, sending fifth indication information to the first terminal device, where the fifth indication information indicates to exit a non-public network access mode or enter a public network access mode. In a possible scenario of any method in the first aspect to the fourth aspect, the terminal device is in a serving network (for example, a home network) and accesses the serving network. According to a current solution, even if there is coverage of the hosting network within coverage of the serving network, the terminal device cannot access the hosting network at a specific location to obtain a localized service. According to the method provided in this application, the terminal device may access the hosting network at a specific location based on the received indication information in this scenario (that is, the indication information #1 indicates to access the hosting network when the indication information #1 is received).

According to a fifth aspect, this application provides a service subscription method. The method includes: A terminal device receives identification information of a service. The terminal device determines to subscribe to the service. The terminal device sends indication information to an access network device or an access management function entity, where the indication information indicates to subscribe to the service.

According to the method, the terminal device determines, based on the received identification information of the service, to subscribe to the service, and then indicates to a network side that the service is subscribed to. The network side learns that the terminal device subscribes to the service, so that it can be ensured that the terminal device obtains the service.

In a possible implementation, that a terminal device receives identification information of a service includes: The terminal device receives a broadcast message from the access network device, where the broadcast message includes the identification information of the service; or the terminal device receives a non-access stratum message from the access management function entity, where the non-access stratum message includes the identification information of the service. This implementation provides a plurality of manners in which the terminal device receives the identification information of the service.

According to a sixth aspect, this application provides an information monitoring method. The method includes: A terminal device in a first network receives first indication information from an access management function entity, where the first indication information indicates to perform reporting when information about a second network is received. The terminal device receives the information about the second network. The terminal device sends second indication information to the access management function entity, where the second indication information indicates that the information about the second network is received.

According to the method, the terminal device in the first network may monitor the information about the second network based on indication information of a network side, and perform reporting to the network side after receiving the information about the second network. The network side learns that the terminal device receives the information about the second network, so that it can be ensured that the terminal device can obtain a service provided by the second network.

In a possible implementation, the information about the second network includes one or more of the following: a cell identifier, a closed access group identifier, a group identifier for network selection, a tracking area identifier, a slice identifier, or a data network name of the second network.

According to a seventh aspect, this application provides a network access method. The method includes: A terminal device obtains location information corresponding to a service subscribed to by the terminal device. The terminal device accesses a hosting network when the terminal device is located in an area indicated by the location information, where the hosting network is used to provide the terminal device with a connection for obtaining the service.

According to the method, the terminal device obtains the location information corresponding to the service, and accesses the hosting network when determining that the terminal device is located in the area indicated by the location information, to access the hosting network and obtain the service.

In a possible implementation, the method further includes: The terminal device obtains a location of the terminal device. The terminal device determines, based on the location of the terminal device and the location information, that the terminal device is located in the area indicated by the location information. In this implementation, it is determined, based on the location of the terminal device, whether the terminal device is located in the area indicated by the location information.

In a possible implementation, that the terminal device accesses a hosting network when the terminal device is located in an area indicated by the location information includes: The terminal device accesses the hosting network when the terminal device leaves a registration area, where the registration area is an area outside the area indicated by the location information. In this implementation, whether the terminal device is located in the area indicated by the location information is determined based on whether the terminal device leaves the registration area.

In a possible implementation, that the terminal device accesses a hosting network when the terminal device is located in an area indicated by the location information includes: The terminal device accesses the hosting network when the terminal device receives network information of the area indicated by the location information. In this implementation, whether the terminal device is located in the area indicated by the location information is determined based on whether the terminal device receives the network information of the area indicated by the location information.

In a possible implementation, the method further includes: The terminal device monitors the network information. In this implementation, the terminal device learns, in a listening manner, whether the network information is received.

In a possible implementation, the network information includes one or more of the following: a closed access group identifier, a group identifier for network selection, a cell identifier, a tracking area identifier, a slice identifier, a network identifier, or a data network name.

In a possible implementation, the location information includes one or more of the following: a coordinate value, longitude and latitude, the closed access group identifier, the group identifier for network selection, the cell identifier, the tracking area identifier, the slice identifier, the network identifier, or the data network name.

In a possible implementation, the method further includes: obtaining time information corresponding to the service; and that the terminal device accesses a hosting network when the terminal device is located in an area indicated by the location information includes: The terminal device accesses the hosting network when the terminal device is located in the area indicated by the location information and is within time indicated by the time information. In this implementation, the terminal device accesses the hosting network when it is determined that the terminal device is located in the area indicated by the location information corresponding to the service and is within the time indicated by the time information corresponding to the service.

In a possible implementation, the method further includes: The terminal device determines, based on a timer, to be within the time indicated by the time information. In this implementation, it is determined, by setting the timer, to be within the time indicated by the time information.

In a possible implementation, the time information includes one or more of the following: a start moment, a time period, or an end moment of the service.

In a possible implementation, when the terminal device is located in the area indicated by the location information, there is coverage of a home network or a visited network corresponding to the terminal device in the area indicated by the location information. In this implementation, although there is the coverage of the home network or the visited network of the terminal device in the area indicated by the location information, the terminal device still accesses the hosting network when determining that the terminal device is located in the area indicated by the location information corresponding to the service.

In a possible implementation, that a terminal device obtains location information corresponding to a service subscribed to by the terminal device includes: The terminal device receives the location information and indication information from a core network device, where the indication information indicates to access the hosting network when the terminal device is located in the area indicated by the location information. In this implementation, the terminal device may receive the location information and the indication information from the core network device, and learn, based on the indication information, that the terminal device accesses the hosting network when the terminal device is located in the area indicated by the location information.

In a possible implementation, the terminal device receives the location information, the indication information, and a network selection list from the core network device, where the network selection list includes identification information of the hosting network, and the hosting network in the network selection list has a highest priority. In this implementation, when determining that the terminal device is located in the area indicated by the location information, the terminal device performs network selection based on the indication information and the network selection list, to select and access the hosting network. It may be understood that, in this implementation, a function of the indication information may be replaced with indicating to perform network selection based on the network selection list in the area indicated by the location information.

According to an eighth aspect, this application provides a communication apparatus. The apparatus has a function of implementing any implementation method in the first aspect to the fourth aspect. The function may be implemented by hardware, or may be implemented by hardware executing corresponding software. The hardware or the software includes one or more modules corresponding to the function.

According to a ninth aspect, this application provides a communication apparatus. The apparatus may be a terminal device or a module (for example, a chip) used in the terminal device. The apparatus has a function of implementing any implementation method in the fifth aspect to the seventh aspect. The function may be implemented by hardware, or may be implemented by hardware executing corresponding software. The hardware or the software includes one or more modules corresponding to the function.

According to a tenth aspect, this application provides a communication apparatus, including units or means (means) configured to perform steps of any implementation method in the first aspect to the seventh aspect.

According to an eleventh aspect, this application provides a communication apparatus, including a processor and a memory. The memory is configured to store computer instructions, and when the apparatus runs, the processor executes the computer instructions stored in the memory, so that the apparatus performs any implementation method in the first aspect to the seventh aspect.

According to a twelfth aspect, this application provides a communication apparatus, including a processor and an interface circuit. The processor is configured to: communicate with another apparatus through the interface circuit, and perform any implementation method in the first aspect to the seventh aspect. There may be one or more processors.

According to a thirteenth aspect, this application provides a computer-readable storage medium. The computer-readable storage medium stores instructions, and when the instructions are run on a communication apparatus, any implementation method in the first aspect to the seventh aspect is performed.

According to a fourteenth aspect, this application provides a computer program product. The computer program product includes a computer program or instructions. When the computer program or the instructions are run by a communication apparatus, any implementation method in the first aspect to the seventh aspect is performed.

According to a fifteenth aspect, this application provides a chip system, including a processor, configured to perform any implementation method in the first aspect to the seventh aspect.

According to a sixteenth aspect, this application provides a communication system, including a communication apparatus that performs any implementation method in the first aspect to the fourth aspect and a terminal device that performs any implementation method in the fifth aspect to the seventh aspect.

In a possible implementation, the communication system further includes another device connected to the communication apparatus or the terminal device.

### BRIEF DESCRIPTION OF DRAWINGS

FIG. 1 is a diagram of a network selection priority sequence of a UE;
FIG. 2 is a schematic flowchart in which an HPLMN sends an updated network selection list to a UE;
FIG. 3 is a schematic flowchart in which an AF sends information to a core network;
FIG. 4 is a diagram of a system architecture to which embodiments of this application are applied;
FIG. 5 is a diagram of a 5G network architecture to which embodiments of this application are applied;
FIG. 6 is a schematic flowchart of a network access method according to an embodiment of this application;
FIG. 7 is a schematic flowchart of another network access method according to an embodiment of this application;
FIG. 8 is a schematic flowchart in which a home network obtains information about a localized service of a UE according to an embodiment of this application;
FIG. 9 is a schematic flowchart of a network access method according to an embodiment of this application;
FIG. 10 is a schematic flowchart of a network access method according to an embodiment of this application;
FIG. 11 is a diagram of a communication apparatus according to an embodiment of this application; and
FIG. 12 is a diagram of a communication apparatus according to an embodiment of this application.

### DESCRIPTION OF EMBODIMENTS

To make the objectives, technical solutions, and advantages of this application clearer, the following describes embodiments of this application with reference to the accompanying drawings.

In this application, unless otherwise specified, "/" represents an "or" relationship between associated objects. For example, A/B may represent A or B. The term "and/or" in this application describes only an association relationship between associated objects and represents that three relationships may exist. For example, A and/or B may represent the following three cases: Only A exists, both A and B exist, and only B exists, where A and B may be singular or plural. In addition, in this application, unless otherwise specified, "a plurality of" means two or more. "One or more" or similar expressions refer to any combination of these items, including any combination of singular items (pieces) or plural items (pieces). For example, one or more of a, b, and c may represent a, b, c, a and b, a and c, b and c, or a, b, and c, where a, b, and c may be singular or plural. In addition, to clearly describe the technical solutions of this application, terms such as "first" and "second" are used in this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, various numbers in this application are distinguished for ease of description, but are not intended to limit the scope of this application. The sequence numbers of the foregoing processes do not mean execution sequences, and the execution sequences of the processes should be determined based on functions and internal logic of the processes.

The following describes some terms and technologies in embodiments of this application, to facilitate understanding by a person skilled in the art.

### 1. Non-public network (non-public network, NPN)

The NPN, different from a public network, provides a service for specific users. As defined in the 3rd generation partnership project (3rd generation partnership project, 3GPP) protocol TS 23.501, there are two types of NPNs based on whether a core network (Core Network, CN) is standalone:
(1) Standalone NPN (standalone NPN, SNPN): The network is not dependent on a public land mobile network (public land mobile network, PLMN) and is operated by an SNPN operator. It may be understood that a core network of the SNPN is independent of the PLMN network, that is, the core network of the SNPN is independently operated by the SNPN operator. When a user equipment (user equipment, UE) needs to access the SNPN, the user equipment needs to enter an SNPN access mode (access mode). When the UE enters the mode is implemented based on the UE.
(2) Non-standalone NPN (public network integrated NPN, PNI-NPN): The network depends on the PLMN network and is operated by a conventional operator. It may be understood that the PNI-NPN is actually a PLMN, but the PLMN provides a special slice and/or data network to provide an NPN service. In other words, not all UEs can obtain the NPN service. The UE can obtain the NPN service only after slice authentication and/or secondary authentication (an authentication procedure during session establishment) are/is successfully performed. In short, the PNI-NPN isolates a public network service from a private network service through slicing, to provide the private network service for a private network user.

### 2. Localized services (localized service) and hosting network (hosting network)

The localized service may be understood as that the service is obtained at a specific geographical location and/or within specific time. The hosting network is a network that provides a connection to obtain the localized service. The hosting network may be an NPN network or a PLMN network. The network may provide coverage at a specific geographical location and/or within specific time (where the specific geographical location and time are related to the localized service). The localized service may be provided by a hosting network operator or a home network operator, or may be provided by a third-party service provider.

When a user needs to obtain the localized service through the hosting network, the user needs to first access the hosting network and then obtain the localized service through the hosting network. Because the localized service is obtained at the specific geographical location and/or within the specific time, or the hosting network provides coverage only at the specific geographical location and/or within the specific time. Therefore, in this case, the UE needs to access the hosting network at the specific geographical location and/or within the specific time to obtain the localized service.

For example, some services are temporarily provided in a time period of a venue. In an activity such as a concert, a large sports event, a concert, or an amusement park, a network may be established in the venue to provide services such as high-definition video playback, augmented reality (augmented reality, AR), and virtual reality (virtual reality, VR) for users participating in the activity.

It should be noted that names of the localized service and the hosting network are not limited in embodiments of this application. Any service obtained at a specific geographical location and/or within specific time may be understood as the localized service in this application and included in the scope of this application. Correspondingly, any network that provides a connection for the service may be understood as the hosting network in this application and included in the scope of this application.

### 3. Network selection of a UE

There are two cases for network selection (that is, selecting a network). One case is automatic network selection. To be specific, a UE automatically selects a PLMN based on a PLMN priority sequence and selects an optimal cell in the PLMN for registration. The other case is manual network selection. To be specific, currently available networks are all presented to the user, such that the user is granted to select a PLMN and select an optimal cell in the PLMN for registration.

The automatic network selection mainly includes three processes: 1. PLMN selection. 2. Cell selection. 3. Location registration. In short, after selecting a PLMN, the UE starts to select a cell that belongs to the PLMN. When such a cell is found, information about a neighboring cell may be known from system information broadcast, and the UE may select a cell with an optimal signal from all cells to camp. Then, the UE initiates a location registration process. After the location registration is successful, the UE successfully camps on the cell. That is, the UE successfully accesses the network.

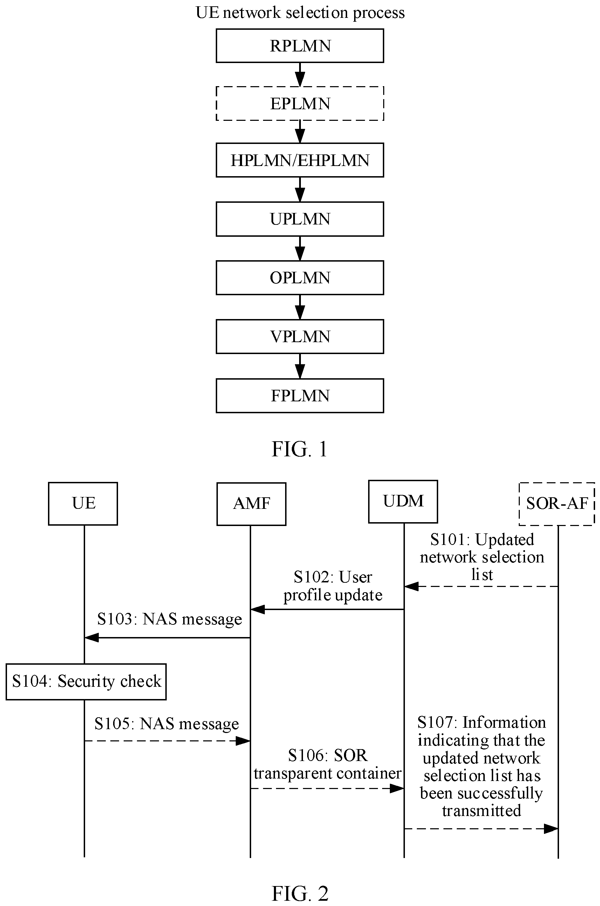

During the PLMN selection, the UE selects an available network with a high priority from a list based on a priority sequence in the network selection list. As shown in FIG. 1, the priority sequence is successively as follows: registered PLMN-equivalent PLMN-equivalent home PLMN-user controlled PLMN-operator controlled PLMN-visited PLMN-forbidden PLMN.

The registered PLMN (registered PLMN, RPLMN) is a PLMN that is registered last time and has a highest priority. The equivalent PLMN (equivalent PLMN, EPLMN) is an equivalent PLMN of the RPLMN. However, the UE may store cell information of the RPLMN (such as a frequency and scrambling code). The information can facilitate a subsequent cell selection speed. However, the UE does not store cell information of the EPLMN. Therefore, the EPLMN has a lower priority than the RPLMN. The equivalent home PLMN (equivalent home PLMN, EHPLMN) is an equivalent PLMN of a home PLMN (HPLMN) and is written in a universal subscriber identity module (Universal Subscriber Identity Module, USIM) card. Priorities of the EHPLMN and the HPLMN are the same. When the RPLMN is the HPLMN, the EPLMN is the EHPLMN. When the RPLMN is not the HPLMN, the EPLMN is not the EHPLMN. The user controlled PLMN (user controlled PLMN, UPLMN) is a PLMN controlled by the user, that is, a PLMN with which the UE has registered when the user performs manual network selection, and is stored in the USIM card. The operator controlled PLMN (operator controlled PLMN, OPLMN) is a PLMN controlled by an operator, that is, an operator PLMN that is written in the USIM card and that signs a roaming agreement with a home operator. The visited PLMN (visited PLMN, VPLMN) is a visited PLMN. The forbidden PLMN (forbidden PLMN, FPLMN) is a forbidden PLMN. The UE cannot register with the PLMN.

When performing network selection, the UE selects a proper network for access from the list based on the sequence in the network selection list. It may be understood that a prerequisite for the UE to select the proper network for access is that the network provides coverage at a location of the UE. If the network does not provide coverage, the UE continues to select, based on the priority sequence, a network providing coverage for access from the list.

### 4. A network updates a network selection list for UE

FIG. 2 is a schematic flowchart in which an HPLMN sends an updated network selection list to a UE after the UE registers with the HPLMN or a VPLMN. This procedure includes the following steps.

S101: Optionally, if an HPLMN unified data management (unified data management, UDM) entity supports in obtaining a list of preferred PLMN/access technology combinations (preferred PLMN/access technology combinations) (that is, an updated network selection list) from a steering of roaming application function (steering of roaming application function, SOR-AF) entity, the SOR-AF may send the list to the HPLMN UDM.

The SOR-AF may send a parameter provision update request (Nudm ParameterProvision Update request) message to the HPLMN UDM, where the message includes the updated network selection list.

S102: The HPLMN UDM obtains the updated network selection list, and notifies user profile update to an access and mobility management function (access and mobility management function, AMF).

The HPLMN UDM may receive the updated network selection list from the SOR-AF, or obtain the updated network selection list from a unified data repository (unified data repository, UDR).

The AMF is an AMF of a network with which the UE registers. To be specific, if the UE registers with the HPLMN, the AMF is an AMF of the HPLMN. If the UE registers with the VPLMN, the AMF is an AMF of the VPLMN.

The HPLMN UDM may send a service data management (service data management, SDM) notification (Nudm_SDM_Notification) message to the AMF, where the message includes the updated network selection list that needs to be sent to the UE. Optionally, information about the updated network selection list is included in steering of roaming information (steering of roaming information).

S103: The AMF sends a downlink non-access stratum (non-access stratum, NAS) message to the UE, where the message includes information obtained from the UDM.

In other words, the AMF transparently transmits the information obtained from the UDM to the UE. If the UDM sends the updated network selection list to the AMF, the downlink NAS message includes the network selection list. If the UDM sends the steering of roaming information to the AMF, and the steering of roaming information includes the updated network selection list, the downlink NAS message sent by the AMF to the UE includes the steering of roaming information.

S104: When the UE receives the steering of roaming information or the information about the network selection list, the UE performs security check to confirm that the information is provided by the HPLMN.

If the security check is successful, the UE uploads the information to a USIM card or replaces an operator controlled PLMN selector with access technology (operator controlled PLMN selector with access technology) list stored in the terminal device.

S105: Optionally, if the UDM requests the UE to feed back a response message, the UE includes the response message in an uplink NAS message.

In an example, the response message is included in a steering of roaming transparent container (SOR transparent container) in the uplink NAS message.

S106: The AMF sends the SOR transparent container to the UDM.

The AMF may send the SOR transparent container to the UDM via an Nudm_SDM_Info message. It may be understood that the SOR transparent container includes the response message sent by the UE to the UDM. After receiving the information, the UDM verifies that the response message is sent by the UE.

S107: Optionally, if the updated network selection list is provided by the SOR-AF, the HPLMN UDM sends a message to the SOR-AF, to indicate that the network selection list has been successfully transmitted to the UE.

For example, the HPLMN UDM sends a steering of roaming information (Nsoraf_SoR_Info) message to the SOR-AF, where the message includes information indicating that the updated network selection list has been successfully transmitted.

### 5. An application function (application function, AF) entity sends information to a core network

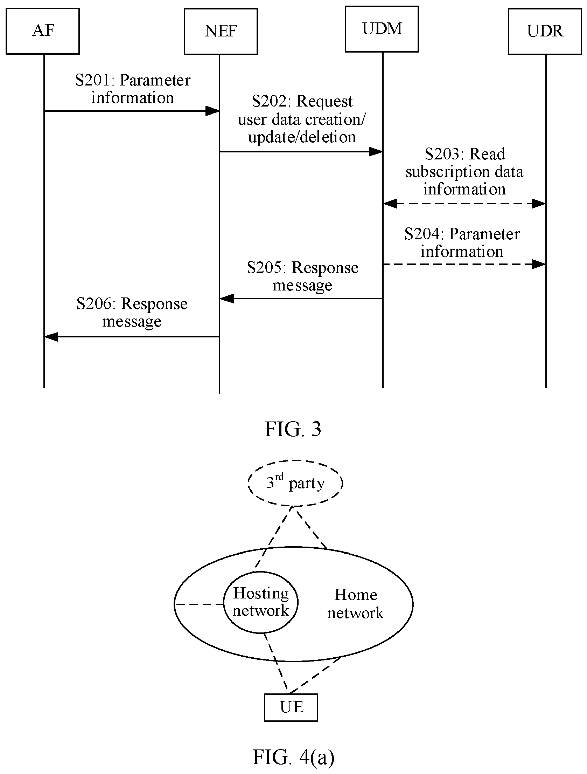

FIG. 3 is a schematic flowchart in which an AF sends information to a core network. The information may be information at a user granularity (that is, parameter information related to a user or a terminal device), or may be information at an application granularity (that is, parameter information related to an application). This procedure includes the following steps.

S201: The AF sends one or more pieces of parameter information to a network exposure function (network exposure function, NEF) entity.

In an implementation, the AF sends one or more pieces of parameter information to the NEF by sending a parameter provision creation request (Nnef_ParameterProvision_Create request) or a parameter provision update request (Nnef_ParameterProvision_Update Request) message to the NEF. It may be understood that, if a parameter is created for the first time, the parameter provision creation request message is sent. If a parameter has been created before and needs to be updated, the update request message is sent. To delete the sent parameter information, a parameter provision deletion request (Nnef_ParameterProvision_Delete Request) message is sent.

If the sent parameter information is at a user granularity (or a terminal device granularity), the message may include a generic public subscription identifier (generic public subscription identifier, GPSI), an AF identifier (identifier, ID), and parameter information that needs to be created/updated/deleted. The GPSI may be understood as an external identifier (for example, an external GPSI) of a UE, and the AF ID identifies an application. Optionally, the AF may send a GPSI list to a UDM, to indicate that an updated parameter is related to the UE in the list.

S202: If the NEF has authorized the AF to provide a parameter, the NEF requests user data creation/update/deletion.

Specifically, the NEF may send a parameter provision creation/update/deletion (Nudm_ParameterProvision_Create/Update/Delete request) message to the UDM, where the message includes the parameter provisioned by the AF.

Optionally, the NEF maps the GPSI provided by the AF to a core network identifiable identifier (for example, an internal GPSI), and sends the internal identifier to the UDM.

Alternatively, if the AF is a trusted AF, the AF may directly update the parameter for the UDM without using the NEF. In this case, the AF directly sends a parameter provision creation/update/deletion request message (Nudm_ParameterPro message, vision_Create/Update/Delete request) to the UDM. The message includes a subscription permanent identifier (subscription permanent identifier, SUPI), a SUPI list, or an internal identifiable identifier (such as the internal GPSI) directly provisioned by the AF.

S203: Optionally, the UDM may read subscription data information from a UDR, to verify whether data that needs to be updated is valid and authorize the update data.

In an implementation, the UDM reads the subscription data information from the UDR by sending a data management query (Nudr_DM Query) message to the UDR.

S204: If the UDM authorizes the AF to provide user parameter information, the UDM maps the GPSI to a SUPI, and sends the parameter information to the UDR.

In an implementation, the UDM sends a data management creation/update/deletion (Nudr_DM Create/Update/Delete) message to the UDR.

S205: The UDM sends a response message (for example, an Nudm_ParameterProvision_Create/Update/Delete response) to the NEF, to indicate that parameter update succeeds or fails. If a failure occurs, the message may include indication information indicating a failure cause.

S206: The NEF sends a response message (for example, Nnef_ParameterProvision_Create/Update/Delete response) to the AF, to indicate that the parameter update succeeds or fails. If the failure occurs, the message may include the indication information indicating the failure cause.

It can be learned from the foregoing descriptions of the technologies in embodiments of this application that a service provider of a localized service may sign a contract with an operator of a hosting network, so that a UE may obtain, through the hosting network, the localized service provided by the service provider.

After the UE subscribes to the localized service from the service provider of the localized service, the service provider may update parameter information for an HPLMN of the UE using the procedure shown in FIG. 3. The HPLMN of the UE may learn of, using the procedure, specific localized services to which the UE subscribes, and specific geographical locations and/or specific time periods at and/or in which the localized services are accessed. Optionally, the service provider may further provide information (for example, network identification information) about the hosting network for the HPLMN.

Alternatively, the service provider of the localized service may directly provide information about a service granularity, such as location information, time information, or information about the hosting network, for the HPLMN. In this way, the HPLMN may learn of a specific geographical location, a specific time period, and a specific hosting network at, in, and through which the localized service can be obtained. However, the HPLMN does not learn of specific UEs that subscribe to these localized services.

However, after the UE accesses a network, if the network has a coverage signal all the time, the UE usually does not change the network for access. In a roaming scenario, the HPLMN can update a network selection list for the UE, so that the UE can change an accessed VPLMN. However, in this scenario, the UE perform access through the VPLMN only when there is no coverage of the HPLMN. If the UE is within the coverage of the HPLMN, the UE cannot be switched to access the hosting network, and therefore cannot obtain the localized service. In other words, currently, the UE cannot automatically access the hosting network at a specific geographical location and/or within specific time. Therefore, there is a need to enhance an existing mechanism to enable the UE to access the hosting network at the specific geographical location and/or within the specific time, so that the localized service can be obtained. This application can resolve a problem of how to enable the UE to access the hosting network at the specific geographical location and/or within the specific time after a home network of the UE obtains information about the localized service (for example, the location information, the time information, or the information about the hosting network of the localized service).

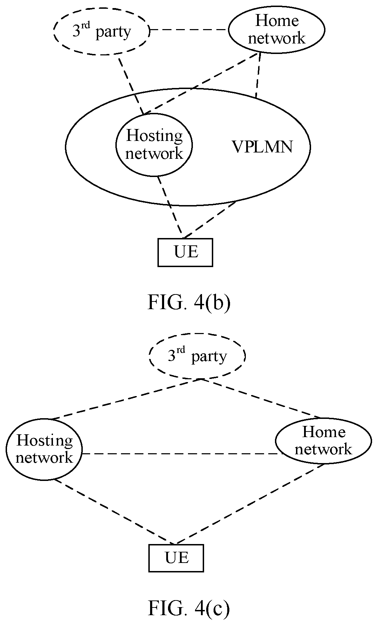

FIG. 4 is a diagram of a system architecture to which embodiments of this application are applied. This embodiment of this application is described by using a scenario in which a hosting network, a home network, and a visited network each may be an NPN or a PLMN. In addition, there may be coverage of the home network or the visited network, or may be no coverage of another network within coverage of the hosting network.

FIG. 4(a) is a scenario of co-coverage between the hosting network and the home network. To be specific, before a UE is switched to the hosting network, the UE is within the coverage of the home network, that is, the UE registers with the home network before accessing the hosting network.

FIG. 4(b) is a scenario of no co-coverage between the hosting network and the home network but co-coverage between the hosting network and the visited network. To be specific, the UE is in the visited network before being switched to the hosting network, and is connected to the home network through a roaming architecture. Although the UE is not within the coverage of the home network, the UE can still be managed by the home network through the roaming architecture. To be specific, the UE registers with the visited network before accessing the hosting network, and communicates with the home network through the roaming architecture.

FIG. 4(c) is a scenario of no co-coverage between the hosting network and the home network and no co-coverage between the hosting network and the visited network. To be specific, within the coverage of the hosting network, no other network is deployed, or another network is deployed, but the network does not sign a roaming agreement with the home network. To be specific, the UE is in a deregistered state or a radio resource control (radio resource control, RRC) idle state before being switched to the hosting network.

Embodiments of this application may be applied to a 5th generation (5th Generation, 5G) network. That is, the hosting network, the home network, or the visited network in embodiments of this application may be a 5G network. However, it may be understood that the 5G network is an example of embodiments of this application, and does not constitute a limitation on embodiments of this application. Embodiments of this application may be further applicable to a 4G network, a wireless fidelity (wireless fidelity, Wi-Fi) system, a 3 GPP-related cellular system, a future-oriented evolved system, or the like.

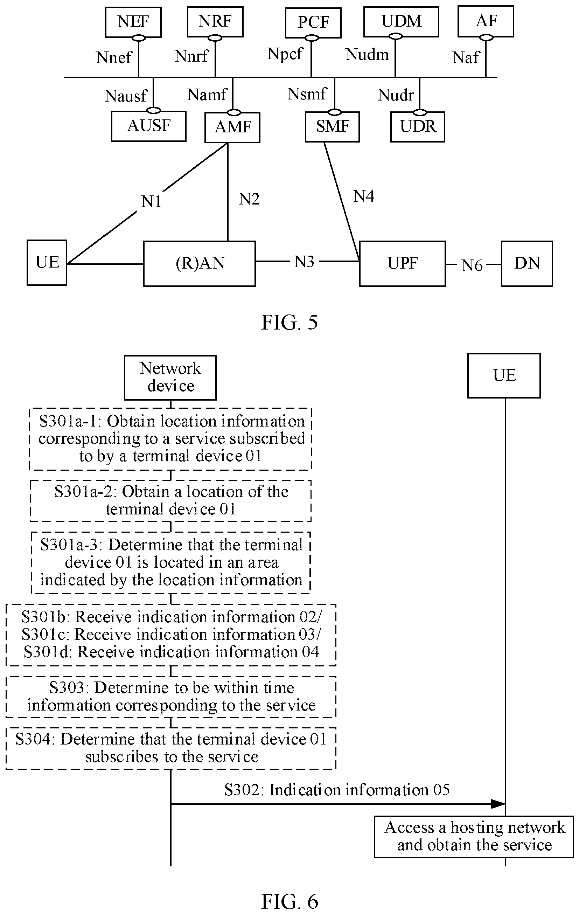

FIG. 5 is a diagram of a 5G network architecture to which embodiments of this application are applied. The 5G network architecture may include a terminal device, an access network, and a core network. The terminal device accesses a data network (data network, DN) through the access network and the core network.

The terminal device may be a UE, a mobile station, a mobile terminal, or the like. The terminal device may be widely used in various scenarios, for example, device-to-device (device-to-device, D2D), vehicle-to-everything (vehicle-to-everything, V2X) communication, machine type communication (machine type communication, MTC), internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an urban air transportation vehicle (such as an unmanned aerial vehicle or a helicopter), a ship, a robot, a mechanical arm, a smart home device, or the like. In embodiments of this application, the UE is used as an example of the terminal device for description. The UE that appears in any subsequent place may alternatively be replaced with the terminal device or another example of the terminal device.

The access network is used to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and a wireline access network (wireline access network, WLAN) device. The RAN device is mainly responsible for functions such as radio resource management, quality of service (quality of service, QoS) management, and data compression and encryption on an air interface side. The RAN device may include various forms of base stations, for example, a macro base station, a micro base station (which may also be referred to as a small cell), a relay station, an access point, a balloon station, and a pole station. In systems using different radio access technologies, names of a device having a base station function may be different. For example, in a 5G system, the device is referred to as a RAN or a next-generation NodeB (next-generation Node base station, gNB). In a long term evolution (long term evolution, LTE) system, the device is referred to as an evolved NodeB (evolved NodeB, eNB or eNodeB). The access network device may include an NG-RAN, a non-3GPP interworking function (non-3GPP interworking function, N3IWF), a trusted non-3GPP gateway function (Trusted Non-3 GPP Gateway Function, TNGF), a trusted WLAN interworking function (Trusted WLAN Interworking Function, TWIF), and a wireline-access gateway (Wireline-Access Gateway Function, W-AGF).

The access network device and the UE may be at a fixed location, or may be mobile. The access network device and the UE may be deployed on land, where the deployment includes indoor, outdoor, handheld, or vehicle-mounted deployment; may be deployed on a water surface; or may be deployed on an airplane, a balloon, or an artificial satellite in the air. An application scenario of the access network device and the UE is not limited in embodiments of this application.

The core network is responsible for maintaining subscription data of a mobile network, and provides session management, mobility management, policy management, security authentication, and other functions for the UE. The core network includes but is not limited to the following entities: an application function (application function, AF) entity, a unified data management (unified data management, UDM) entity, a unified data repository (unified data repository, UDR) entity, a policy control function (policy control function, PCF) entity, a session management function (session management function, SMF) entity, an access and mobility management function (access and mobility management function, AMF) entity, a network repository function (network repository function, NRF) entity, an authentication server function (authentication server function, AUSF) entity, a network exposure function (network exposure function, NEF) entity, and a user plane function (user plane function, UPF) entity.

The AMF entity is mainly responsible for mobility management in the mobile network, for example, user location update, registration of a user with a network, and user switching.

The SMF entity is mainly responsible for session management in the mobile network, for example, session establishment, modification, and release. A specific function is, for example, allocating an internet protocol (internet protocol, IP) address to the user, or selecting a UPF that provides a packet forwarding function.

The UPF entity is mainly responsible for forwarding and receiving user data, and may receive user data from the data network, and transmit the user data to the UE through the access network device; or may receive user data from the UE through the access network device, and forward the user data to the data network.

The UDM entity has functions such as subscription data management and user access authentication and authorization.

The UDR entity has an access function for subscription data, policy data, application data, and the like.

The NEF entity is mainly configured to support capability and event exposure. The AF entity transfers a requirement of an application side for a network side, for example, a QoS requirement or user status event subscription. The AF may be a third-party function entity, or may be an operator-deployed application service, for example, an IP multimedia subsystem (IP Multimedia Subsystem, IMS) voice call service.

The PCF entity mainly can provide a unified policy framework to control network behavior, provide a policy rule for a network function at a control layer, and is responsible for obtaining user subscription information related to policy decision-making. The PCF entity may provide a policy for the AMF entity and the SMF entity, for example, a QoS policy, a slice selection policy, or a UE policy.

The NRF entity may be configured to provide an entity discovery function and provide entity information corresponding to an entity type based on a request of another entity. The NRF also provides an entity management service, such as entity registration, update, deregistration, and entity status subscription and push.

The AUSF entity is responsible for performing authentication on the UE and verifying validity of the UE.

A plurality of services may be deployed on the DN, and a service such as data and/or voice may be provided by the DN for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee can access information, a data resource, or the like on the internal office network of the company.

The AF entity, the UDM entity, the UDR entity, the PCF entity, the SMF entity, the AMF entity, the NRF entity, the AUSF entity, the NEF entity, and the UPF entity may also be respectively referred to as an AF, a UDM, a UDR, a PCF, an SMF, an AMF, an NRF, an AUSF, a NEF, and a UPF for short.

In FIG. 5, Nausf, Nnef, Nnrf, Namf, Npcf, Nsmf, Nudm, Nudr and Naf are service-based interfaces provided by the AUSF, the NEF, the NRF, the AMF, the PCF, the SMF, the UDM, the UDR, and the AF respectively, and are configured to invoke corresponding service-based operations. N1, N2, N3, N4, and N6 are interface sequence numbers. Meanings of these interface sequence numbers are as follows:
(1) N1: represents an interface between the AMF and the UE, and may be configured to transfer non-access stratum (non-access stratum, NAS) signaling (for example, including QoS rules from the AMF) to the UE.
(2) N2: represents an interface between the AMF and the access network device, and may be configured to transfer radio bearer control information from a core network side to the access network device, and the like.
(3) N3: represents an interface between the access network device and the UPF, and is mainly configured to transfer uplink and downlink user plane data between the access network device and the UPF.
(4) N4: represents an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) N6: represents an interface between the UPF and the DN, and is configured to transfer uplink and downlink user data flows between the UPF and the DN.

It may be understood that the foregoing entity (or a function or a network element) may be a network element in a hardware device, may be a software function running on dedicated hardware, or may be a virtualized function instantiated on a platform (for example, a cloud platform). In a possible implementation method, the foregoing entity may be implemented by one device, may be jointly implemented by a plurality of devices, or may be a functional module in one device. This is not specifically limited in embodiments of this application.

FIG. 6 is a schematic flowchart of a network access method according to an embodiment of this application. The method includes: S301a-1: Obtain location information corresponding to a service subscribed to by a terminal device 01. The service subscribed to by the terminal device in this embodiment of this application may be a service requested by the terminal device, a service subscribed to by the terminal device, or a service obtained by the terminal device using a current subscription procedure. In other words, any service that can be obtained by the terminal device may be understood as the service subscribed to by the terminal device in this embodiment of this application. This is not limited.

The service may be a localized service. The location information may include one or more of the following: a coordinate value, longitude and latitude, a closed access group identifier for network selection (closed access group id, CAG ID), a group identifier for network selection (group Identifier for network selection, GIN), a cell identifier, a tracking area identifier, a network identifier, a data network name (data network name, DNN), or a slice identifier corresponding to the service, or may be a name such as a country, a province, a city, a district, a county, a street, a countryside, a village, a state, or a block. The CAG ID may indicate a cell used to transmit a non-public network service in a PNI-NPN scenario, that is, the CAG ID indicates a cell used to transmit a non-public network service or a cell associated with a non-public network, or in other words, one CAG ID may identify one or more users that can access a CAG cell. The GIN may identify an alliance or a group, where the alliance or group includes one or more SNPNs, and may be formed by a PLMN ID+network identifier (network identifier, NID). It may be understood that any information that can indicate a location (or a network) corresponding to the service may be understood as the location information in this embodiment of this application. For example, the location information may indicate a venue of a concert, a large sports event, a concert, or an amusement park.

It should be noted that any terminal device that subscribes to the service may be understood as the terminal device 01 in this embodiment of this application, and is not limited to a specific terminal device.

In an example, a manner of obtaining the location information may include: receiving the location information from an application function entity, obtaining the location information from subscription data of the terminal device 01, or obtaining the location information in a process in which the terminal device 01 subscribes to the service.

S301a-2: Obtain a location of the terminal device 01.

In an example, an access management function entity may be requested to position the terminal device 01, to obtain the location of the terminal device 01. Further, the access management function entity may be requested to perform periodic positioning and location reporting on the terminal device 01.

S301a-3: Determine, based on the location information and the location of the terminal device 01, that the terminal device 01 is located in an area indicated by the location information.

Whether the terminal device 01 is located in the area indicated by the location information may be learned of based on the location of the terminal device 01.

It should be noted that the terminal device 01 is located in the area indicated by the location information, and is not limited to the area indicated by the location information, or may be located at an edge or near the area.

In addition to that the terminal device 01 determines that the terminal device 01 is located in the area indicated by the location information in S301a, this embodiment of this application further provides a manner in which another entity determines that the terminal device 01 is located in the area indicated by the location information and performs indication. For details, refer to S301b.

S301b: Receive indication information 02, where the indication information 02 indicates that the terminal device 01 is located in the area indicated by the location information.

In an example, the terminal device 01 may be requested to perform reporting when entering a range indicated by the location information, or an event that the terminal device 01 enters the range indicated by the location information may be subscribed to from the access management function entity, so that the access management function entity performs reporting when the terminal device 01 enters the range indicated by the location information.

The access management function entity may periodically position the terminal device 01, and perform reporting when the terminal device 01 is located in the area indicated by the location information. A positioning manner is not limited in this application, and may be a positioning procedure defined in 3GPP, or may be a manner such as satellite navigation positioning.

In addition to S301a and S301b, this embodiment of this application further provides a manner of determining, by learning that the terminal device 01 leaves a registration area 01, that the terminal device 01 is at the location corresponding to the service (or within coverage of a hosting network). For details, refer to S301c.

S301c: Receive indication information 03, where the indication information 03 indicates that the terminal device 01 leaves the registration area 01. The registration area 01 is an area outside the area indicated by the location information.

In an example, the terminal device 01 may be requested to perform reporting when leaving the registration area 01, or an event that the terminal device 01 leaves the registration area 01 may be subscribed to from the access management function entity, so that the indication information 03 is received from the access management function entity when the terminal device 01 leaves the registration area 01.

The access management function entity may receive, in a mobility registration procedure of the terminal device 01, information indicating that the terminal device 01 leaves the registration area 01. For example, in a registration procedure initiated by the terminal device 01, based on that a registration type included in a registration request message is mobility registration update (mobility registration update), the access management function entity may learn that the terminal device 01 leaves an area indicated by the registration area, and initiate a mobility registration update procedure.

If an initial registration area of the terminal device 01 is not the registration area 01, the registration area of the terminal device 01 needs to be updated to the registration area 01 based on the location information. Specifically, the registration area of the terminal device 01 may be updated in the following manner: 1: Determine, based on the location information, to update the registration area of the terminal device 01 to the registration area 01, and send the registration area 01 to the access management function entity to indicate to update the registration area of the terminal device 01. After receiving the registration area 01, the access management function entity sends the registration area 01 to the terminal device 01. 2: Provide the location information for the access management function entity, to indicate to update the registration area of the terminal device 01 based on the location information. The access management function entity determines the registration area 01 based on the location information, and sends the registration area 01 to the terminal device 01.

In addition to S301a, S301b, and S301c, this embodiment of this application further provides a manner of determining, by learning that the terminal device 01 receives network information of the area indicated by the location information, that the terminal device 01 is at the location corresponding to the service (or within the coverage of the hosting network). For details, refer to S301d.

S301d: Receive indication information 04, where the indication information 04 indicates that the terminal device 01 receives the network information of the area indicated by the location information.

The network information may be a cell identifier, a CAG ID, a GIN, a tracking area identifier, a slice identifier, a network identifier, a data network name, or the like of the hosting network.

In an example, the indication information 04 may be received from the terminal device 01, or the indication information 04 may be received from the access management function entity. Correspondingly, before the indication information 04 is received, an event that the terminal device 01 receives the network information may be subscribed to from the terminal device 01 or the access management function entity.

Optionally, before the event is subscribed to from the terminal device 01 or the access management function entity, the location information may be converted into the network information. For example, the location information is a coordinate value, and the coordinate value may be converted into a corresponding cell identifier, that is, a cell identified by the cell identifier may include a location of the coordinate value. Alternatively, the network information may be the location information. For example, when the location information is the cell identifier, the CAG ID, the GIN, the tracking area identifier, the slice identifier, the network identifier, or the data network name of the hosting network, the network information is the location information.

In an example, after receiving the network information broadcast by an access network device, the terminal device 01 sends, to the access network device or the access management function entity, information indicating that the network information is received. In the PNI-NPN scenario, if the terminal device 01 receives the CAG ID broadcast by the access network device, the terminal device 01 may select the CAG cell based on the CAG ID, and send, to the access network device or the access management function entity, the information indicating that the network information is received. In an SNPN scenario, if the terminal device 01 receives the GIN broadcast by the access network device, the terminal device 01 may learn, based on the GIN, that the terminal device 01 enters coverage of an SNPN corresponding to the GIN, and send, to the access network device or the access management device, the information indicating that the network information is received.

It may be understood that the access network device may broadcast one or more CAG IDs, and when determining that one or some CAG IDs in the one or more CAG IDs are received, the terminal device may send, based on the subscribed event, information indicating that the network information is received. The access network device may broadcast one or more GINs, and when determining that one or some GINs in the one or more GINs are received, the terminal device may send, based on the subscribed event, information indicating that the network information is received.

It should be noted that the network information may further include a neighboring cell of the area indicated by the location information. For example, the location information indicates a cell 1 and a cell 2, and association information of the location information may include the cell 1, the cell 2, and a neighboring cell 3 of the cell 1.

It may be understood that when accepting the event subscription, the terminal device 01 may be in a serving network (for example, a home network or a visited network), and network quality is stable. In this case, the terminal device 01 still listens to network information based on the subscription, and performs reporting after receiving the network information.

S302: Send indication information 05 to the terminal device 01. Correspondingly, the terminal device 01 receives the indication information 05. The indication information 05 indicates to access the hosting network, and the hosting network is used to provide the terminal device 01 with a connection for obtaining the service.

In an example, the sending indication information 05 to the terminal device 01 may include: sending a network selection list 01 to the terminal device 01, where the network selection list 01 includes the indication information 05. The network selection list 01 may be a special type of network selection list different from a current network selection list. The indication information 05 may indicate a type of the network selection list. After receiving the special type of network selection list, the terminal device 01 directly performs network selection based on the network selection list. For example, the terminal device 01 is in the home network. After receiving the special type of network selection list, the terminal device 01 performs network selection based on the network selection list, and does not need to perform network reselection or access a non-home network only in a roaming scenario (or when there is no signal coverage of the home network or the serving network). The network selection list 01 may include identification information of the hosting network, and the hosting network has a highest priority in the network selection list 01.

Alternatively, a network selection list 02 and the indication information 05 are sent to the terminal device 01. The network selection list 02 may include the identification information of the hosting network, and the hosting network has a highest priority in the network selection list 02. After receiving the network selection list 02, the terminal device directly performs network selection based on the network selection list 02 and the indication information 05. For example, the terminal device 01 is in the home network. After receiving the indication information 05, the terminal device 01 performs network selection based on the network selection list 02 and the indication information 05, and does not need to perform network selection only in the roaming scenario (or when there is no signal coverage of the home network or the serving network).

It may be understood that, in the foregoing example, the indication information 05 may also be understood as indicating to perform network selection based on the network selection list 01 or the network selection list 02 when the indication information 05 is received.

In another example, the indication information 05 includes the identification information of the hosting network and information indicating access. Alternatively, the indication information 05 is the identification information of the hosting network. For example, in a localized service scenario, the terminal device learns, based on the received identification information of the hosting network, that access needs to be performed. Alternatively, the indication information 05 is information included in the identification information of the hosting network, for example, a special bit and/or a character string, where the bit and/or the character string indicate/indicates access. Alternatively, the indication information 05 is unbound from the identification information of the hosting network (that is, the indication information 05 does not include the identification information of the hosting network, is not included in the identification information of the hosting network, or is not the identification information of the hosting network). Because the terminal device 01 subscribes to a service, after receiving the indication information 05, the terminal device 01 accesses, based on the indication information 05, the hosting network that provides a connection for obtaining the subscribed service. It may be understood that, provided that the terminal device 01 accesses the hosting network after receiving information, the information may be understood as the indication information 05 in this embodiment of this application. In a scenario, if the home or visited network of the terminal device 01 is a public network (for example, a PLMN) and the hosting network is a non-public network (for example, an SNPN), the terminal device further needs to be indicated to enter (start, run, or activate) a non-public network access mode (SNPN access mode) or exit (stop or deactivate) a public network access mode (PLMN access mode). Alternatively, if the home or visited network of the terminal device 01 is an SNPN and the hosting network is a public network, the terminal device further needs to be indicated to exit (stop or deactivate) a non-public network access mode or enter (start, run, or activate) a public network access mode.

It may be understood that when receiving the indication information 05, the terminal device 01 may be in the serving network (for example, the home network), and network quality is stable. In this case, the terminal device 01 still accesses the hosting network based on the indication information 05.

It should be noted that, before S301b, S301c, or S301d, the location information may be obtained. For specific descriptions of obtaining the location information, refer to S301a. Details are not described herein again.

In addition to indicating, based on the location information, the terminal device 01 to access the hosting network, in this embodiment of this application, the terminal device 01 may alternatively be indicated, with reference to time information corresponding to the service, to access the hosting network. In this case, before S302, the method may further include S303.

S303: Determine to be within the time indicated by the time information corresponding to the service.

In an example, the time information is obtained before it is determined to be within the time indicated by the time information corresponding to the service. For a manner of obtaining the time information, refer to the manner of obtaining the location information in S301a-1. Details are not described herein again.

It should be noted that the time information and the location information may be obtained at the same time, that is, the time information is obtained when the location information is obtained. For example, the location information and the time information are received from the application function entity in a same message.

The time information may include one or more of the following: service start time, service duration, or service end time; or the time information may be time for performing no service, and time for performing the service may be determined based on the time for performing no service.

It may be determined, based on a timer, to be within time indicated by the time information. For example, the time information is the service start time. A timer whose expiration indicates that the service has started may be set. When the timer expires and the terminal device 01 is located in the area indicated by the location information, indication information 01 is sent to the terminal device 01. After receiving the indication information 01, the terminal device 01 accesses the hosting network to obtain the service. After the service ends, the hosting network may directly disconnect and end the service. For example, the time information is the service end time. A timer whose expiration indicates that the service has ended may be set. Before the timer expires, indication information 01 is sent to the terminal device 01 provided that it is determined that the terminal device 01 is located in the area indicated by the location information.

Alternatively, monitoring may be performed based on the time information. For example, when reaching the service start time is monitored, the indication information 01 is sent to the terminal device 01.

It should be noted that even if the time information includes only the service start time or the service end time, it may be understood as being within the time indicated by the time information in this embodiment of this application, provided that it is at a moment or in a time period at or in which the service is being performed, and the time information is not limited to explicitly including a time period.

It should be further noted that the service start time (or moment) included in the time information is not limited to accurate service start time, or may be approximate service start time (for example, there is a short time period between the approximate service start time and the accurate service start moment, and the approximate service start time may be before or after the accurate service start time). The service end time (or moment) included in the time information is not limited to accurate service end time, or may be approximate service end time (for example, there is a short time period between the approximate service end time and the accurate service end moment, and the approximate service end time may be before or after the accurate service end time).

In an example, the obtained location information may be at a granularity of the service. For example, the location information received from the application function entity may be at the granularity of the service. In this case, there is a need to further determine that the terminal device 01 subscribes to the service. Therefore, the method may further include the following S305.

S305: Determine that the terminal device 01 subscribes to the service.

In an example, indication information 06 is sent to the access network device, where the indication information 06 indicates an identifier of the service that is broadcast. After receiving the indication information 06, the access network device performs broadcasting to a terminal device within coverage of the access network device. After receiving the identifier of the service that is broadcast, the terminal device within the coverage of the access network determines to subscribe to the service, and returns a response to the access network device, to indicate that the terminal device requests to subscribe to the service. The access network device learns of a list of terminal devices that request to subscribe to the service, and returns the list of terminal devices that subscribe to the service to an entity that sends the indication information 06 to the access network device, so that the entity learns of the terminal device that subscribes to the service. The list of terminal devices includes the terminal device 01, to learn that the terminal device 01 subscribes to the service. Alternatively, after receiving the identifier of the service that is broadcast, the terminal device within the coverage of the access network determines to subscribe to the service, and requests to subscribe to the service from the access management function entity, for example, requests, via a NAS message, to subscribe to the service from the access management function entity. The access management function entity learns of a list of terminal devices that request to subscribe to the service, and returns the list of terminal devices that subscribe to the service to a data management entity, so that the data management entity learns of the terminal device that subscribes to the service. The list of terminal devices includes the terminal device 01, to learn that the terminal device 01 subscribes to the service.

Optionally, after receiving the identifier of the service, the terminal within the coverage of the access network determines that the terminal has subscribed to the service, and may indicate, to the access network device or the access management function entity, that the terminal has subscribed to the service.

In another example, indication information 07 is sent to the access management function entity, where the indication information 07 indicates to send the identifier of the service to a terminal device managed by the access management function entity. The access management function entity sends, based on the indication information 07, a NAS message including the identifier of the service to the terminal device managed by the access management function entity, and a terminal device that requests to subscribe to or has subscribed to the service returns a response to the access management function entity. The access management function entity further indicates, to an entity that sends the indication information 07 to the access management function entity, the terminal device that requests to subscribe to or has subscribed to the service. In this manner, the entity learns that the terminal device 01 subscribes to the service.

The indication information 06 or the indication information 07 may include the identifier of the service. The identifier of the service may be in a form of a bit and/or a character string, or may be a user-readable or human-readable (human readable) identifier.

In still another example, the list of terminal devices that subscribe to the service is requested from the application function entity, and the application function entity returns the list of terminal devices that subscribe to the service, where the list includes the terminal device 01, to learn that the terminal device 01 subscribes to the service. Alternatively, the application function entity returns indication information 08, to indicate that the terminal device 01 subscribes to the service. The indication information 08 may include identification information of the terminal device 01.

In still another example, subscription information of a plurality of terminal devices is queried or obtained, to learn that the terminal device 01 subscribes to the service. In this example, the access management function entity or the application function entity may update the subscription information of the terminal device in real time. To be specific, after learning that the terminal device subscribes to a service, the access management function entity or the application function entity may request to update the subscription information of the terminal device, so that specific terminal devices that subscribe to the service can be learned of by querying the subscription information. The terminal device may learn of, by receiving a message broadcast by the access network device, specific services that can be subscribed to, and after determining to subscribe to a service, send a NAS message to the access management function entity. The access management function entity may learn, based on the received NAS message, that the terminal device subscribes to the service, and request to update the subscription information of the terminal device.

It should be noted that there is no time sequence requirement between S301a-1 including obtaining the location information corresponding to the service and S304 including determining that the terminal device 01 subscribes to the service. The two steps may be performed simultaneously or separately. This is not limited in this embodiment of this application.

In an example, the method is performed by a home data management entity of the terminal device 01, or another entity that can indicate the terminal device 01 to access the hosting network. According to the method, when the terminal device is located in the area indicated by the location information corresponding to the service, the terminal device is indicated to access the hosting network, so that the terminal device can access the hosting network at a specific location and obtain the service.

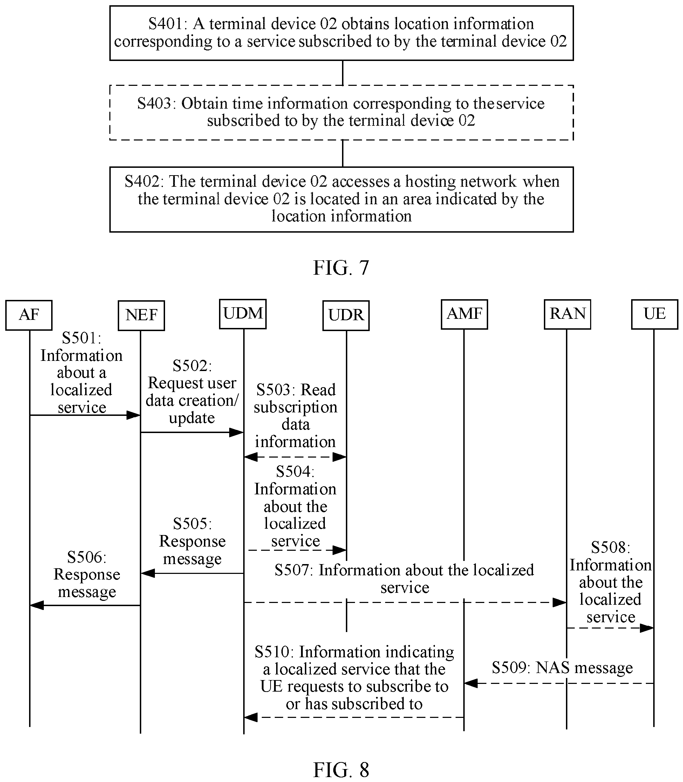

FIG. 7 is a schematic flowchart of another network access method according to an embodiment of this application. The method includes the following steps.

S401: A terminal device 02 obtains location information corresponding to a service subscribed to by the terminal device 02.

The service may be a localized service. The location information may include one or more of the following: a coordinate value, longitude and latitude, a CAG ID, a GIN, a cell identifier, a tracking area identifier, a data network name, or a slice identifier corresponding to the service, or may be a name such as a country, a province, a city, a district, a county, a street, a countryside, a village, a state, or a block. The CAG ID may indicate a cell used to transmit a non-public network service in a PNI-NPN scenario, that is, the CAG ID indicates a cell used to transmit a non-public network service or a cell associated with a non-public network, or in other words, one CAG ID may identify one or more users that can access a CAG cell. The GIN may identify an alliance or a group, where the alliance or group includes one or more SNPNs, and may be formed by a PLMN ID+network identifier (network identifier, NID). It may be understood that any information that can indicate a location corresponding to the service may be understood as the location information in this embodiment of this application. For example, the location information may indicate a venue of a concert, a large sports event, a concert, or an amusement park.

In an example, a manner in which the terminal device 02 obtains the location information may include: receiving the location information from a network side (for example, an access management function entity or a data management entity), or obtaining the location information from subscription data.

If the terminal device 02 obtains the location information from the network side, the terminal device 02 may further receive a network selection list 03 from the network side when obtaining the location information. Further, the terminal device 02 may further receive indication information 09 from the network side when obtaining the network selection list 03, where the indication information 09 indicates to perform network selection based on the network selection list 03 when the terminal device 02 is located in an area indicated by the location information. The terminal device learns, based on the received indication information 09, that the terminal device performs network selection based on the network selection list 03 when the terminal device is located in the area indicated by the location information. Alternatively, the network selection list 03 is a list of a special type, and the terminal device 02 learns, based on the special type, that the terminal device 02 performs network selection based on the network selection list 03 when the terminal device 02 is located in the area indicated by the location information. The network selection list 03 may include identification information of a hosting network, and the hosting network may have a highest priority.

It should be noted that the terminal device 02 may alternatively obtain the location information, the network selection list, or the indication information 09 from different messages or from different entities. This is not limited in this application.

Alternatively, if the terminal device 02 obtains the location information from the network side, the terminal device 02 may further receive indication information 10 from the network side when obtaining the location information, where the indication information 10 indicates to access the hosting network when the terminal device 02 is located in the area indicated by the location information. Further, the terminal device 02 may further receive the identification information of the hosting network from the network side when obtaining the indication information 10.

It should be noted that the terminal device 02 may alternatively obtain the location information or the indication information 09 from different messages or from different entities. This is not limited in this application.

S402: The terminal device 02 accesses the hosting network when the terminal device 02 is located in the area indicated by the location information, where the hosting network is used to provide the terminal device 02 with a connection for obtaining the service.

In an example, the terminal device 02 may determine, in any one or more of the following manners, that the terminal device 02 is located in the area indicated by the location information. Manner 1: Determine, based on an obtained location of the terminal device 02, that the terminal device 02 is located in the area indicated by the location information. Manner 2: When moving out of a registration area 01, determine that the terminal device 02 is located in the area indicated by the location information. Manner 3: When network information of the area indicated by the location information is received, determine that the terminal device 02 is located in the area indicated by the location information. The network information may be a cell identifier, a CAG ID, a GIN, a tracking area identifier, a slice identifier, a network identifier, a data network name, or the like of the hosting network.

In Manner 1, the terminal device 02 may perform positioning by using a global positioning system (GPS), or perform positioning by initiating a positioning procedure (for example, performing location calculation through a core network), and access the hosting network when determining that the terminal device 02 enters the area indicated by the location information.

In Manner 2, the terminal device 02 may update a registration area of the terminal device 02 to the registration area 01 based on the location information, and initiate a mobility registration update procedure when the terminal device 02 moves out of the registration area. After the terminal device 02 completes the mobility registration update procedure, the terminal device 02 accesses the hosting network.

In Manner 3, the terminal device 02 may listen to the network information. Specifically, if the terminal device 02 may receive a broadcast message including the network information, the terminal device 02 chooses to access the hosting network.

The network information may be the location information. For example, when the location information is the cell identifier, the CAG ID, the GIN, the tracking area identifier, the slice identifier, the network identifier, or the data network name of the hosting network, the network information is the location information. Alternatively, before performing listening, the terminal device 02 may convert the location information into the network information. For example, the location information is a coordinate value, and the coordinate value may be converted into a corresponding cell identifier, that is, a cell identified by the cell identifier may include a location of the coordinate value.

In an example, after receiving the network information broadcast by an access network device, the terminal device 02 accesses the hosting network. In the PNI-NPN scenario, if the terminal device 02 receives the CAG ID broadcast by the access network device, the terminal device 02 may select the CAG cell based on the CAG ID and access the CAG cell. In an SNPN scenario, if the terminal device 02 receives the GIN broadcast by the access network device, the terminal device 02 may learn, based on the GIN, that the terminal device 02 enters coverage of an SNPN corresponding to the GIN, and access the SNPN.

It may be understood that the access network device may broadcast one or more CAG IDs, and when determining that one or some CAG IDs in the one or more CAG IDs are received, the terminal device may send, based on a subscribed event, information indicating that the network information is received. The access network device may broadcast one or more GINs, and when determining that one or some GINs in the one or more GINs are received, the terminal device may send, based on a subscribed event, information indicating that the network information is received. It should be noted that, if the terminal device 02 receives the network selection list 03, the terminal device 02 may access the hosting network based on the network selection list 03 when determining that the terminal device 02 is located in the area indicated by the location information.

In this manner, the terminal device 02 may be in a home network or a visited network, and network quality is stable. In this case, the terminal device 02 still listens to the network information (which may also be understood as information about the hosting network).

It may be understood that when the terminal device 02 is located in the area indicated by the location information, the terminal device 02 still accesses the hosting network even if there is coverage of the home network or the visited network in the area.

In a scenario, if the home or visited network of the terminal device 02 is a public network (for example, a PLMN) and the hosting network is a non-public network (for example, an SNPN), the terminal device 02 further needs to enter (or start) a non-public network access mode (SNPN access mode) or exit (or stop) a public network access mode (PLMN access mode). Alternatively, if the home or visited network of the terminal device 02 is a non-public network (for example, an SNPN) and the hosting network is a public network, the terminal device 02 further needs to exit (or stop) a non-public network access mode or enter (or start) a public network access mode.

It should be noted that the terminal device 02 is located in the area indicated by the location information, and is not limited to the area indicated by the location information, or may be located at an edge or near the area.

In addition to that the terminal device 02 determines, based on the location information, to access the hosting network, in this embodiment of this application, the terminal device 02 may alternatively access the hosting network with reference to time information corresponding to the service. In this case, the method may further include the following S403.

S403: Obtain the time information corresponding to the service subscribed to by the terminal device 02.

For a manner of obtaining the time information, refer to the manner of obtaining the location information in S401. Details are not described herein again.

It should be noted that S403 and S401 may be performed simultaneously, that is, the time information is obtained when the location information is obtained. For example, the location information and the time information are received from the access management function entity in a same message.

The time information may include one or more of the following: service start time, service duration, or service end time; or the time information may be time for performing no service, and time for performing the service may be determined based on the time for performing no service.

When S403 is performed, S402 may be specifically: The terminal device 02 accesses the hosting network when the terminal device 02 is located in the area indicated by the location information and is within time indicated by the time information, where the hosting network is used to provide the terminal device 02 with the connection for obtaining the service.

The terminal device 02 may determine, based on a timer, to be within the time indicated by the time information. For example, the time information is the service start time. The terminal device 02 may set a timer whose expiration indicates that the service has started. When the timer expires and the terminal device 02 is located in the area indicated by the location information, the terminal device 02 accesses the hosting network. After the service ends, the hosting network may directly disconnect and end the service. For example, the time information is the service end time. A timer whose expiration indicates that the service has ended may be set. Before the timer expires, the terminal device 02 accesses the hosting network provided that it is determined that the terminal device 02 is located in the area indicated by the location information.

Alternatively, the terminal device 02 may perform monitoring based on the time information, for example, when reaching the service start time is monitored, the terminal device 02 accesses the hosting network.

It should be noted that even if the time information includes only the service start time or the service end time, it may be understood as being within the time indicated by the time information in this embodiment of this application, provided that it is at a moment or in a time period at or in which the service is being performed, and the time information is not limited to explicitly including a time period.

It should be further noted that the service start time (or moment) included in the time information is not limited to accurate service start time, or may be approximate service start time (for example, there is a short time period between the approximate service start time and the accurate service start moment, and the approximate service start time may be before or after the accurate service start time). The service end time (or moment) included in the time information is not limited to accurate service end time, or may be approximate service end time (for example, there is a short time period between the approximate service end time and the accurate service end moment, and the approximate service end time may be before or after the accurate service end time).

According to the method, the terminal device determines, based on the location information, the area corresponding to the service, and when determining that the terminal device is located in the area, accesses the hosting network, to ensure that the terminal device can obtain the service.

The following uses a 5G architecture as an example to specifically describe the network access method provided in embodiments of this application. It should be noted that the following entities such as a UE, an AMF, a UDM, and an AF are merely used as examples, and do not constitute a limitation on this application.

To perform the network access method provided in embodiments of this application, a UDM in a home network needs to obtain information about a localized service of the UE. FIG. 8 is a schematic flowchart in which a home network obtains information about a localized service of a UE according to an embodiment of this application. This procedure includes the following steps.

S501: An AF sends one or more pieces of information about a localized service to a NEF. Correspondingly, the NEF receives the one or more pieces of information about the localized service from the AF.

The information about the localized service may include one or more of the following: a service identifier, an application identifier, location information, or time information.

The application identifier identifies an application corresponding to the localized service, for example, may be an application descriptor (application descriptor). The application descriptor may include one or more of the following: an operating system identifier (operating system identifier, OSId), an operating system application identifier (operating system application identifier, OSAppId), or an operating system specific application identifier (operating system specific application identifier, OSAppId).

A localized service identifier identifies the localized service, for example, may be a service identifier (service identifier) or an identifier of a data flow (service data flow, SDF) corresponding to a service, or may identify a specific instance of the service.

The location information indicates an area in which the localized service may be obtained, and may include information about a hosting network, for example, may be a coordinate value, longitude and latitude, registration area information, a CAG ID, a GIN, a cell identifier, a tracking area identifier, a slice identifier, a network identifier, or a data network name. The cell identifier, the tracking area identifier, the slice identifier, the network identifier, the CAG ID, the GIN, or the data network name may be understood as the information about the hosting network. The network identifier may be a PLMN ID or an SNPN ID, where the PLMN ID may be a mobile country code (mobile country code, MCC)+mobile network code (mobile network code, MNC), the SNPN ID may be a PLMN ID+NID. The cell identifier may be a cell ID.

The time information indicates time or a time period at or in which the localized service may be obtained, for example, may be a time period or a moment. If the time information is the time period, the time period in which the localized service may be obtained may be indicated, or a time period in which obtaining of the localized service is prohibited may be indicated, to infer the time period in which the localized service may be obtained. The time period may be indicated by using start time and end time, may be indicated by using start time and duration, may be indicated by using duration and end time, or may be indicated by using duration. The moment may indicate start time or end time at which the localized service may be obtained, so that the time at which the localized service may be obtained may be inferred.

In an implementation, the AF sends the one or more pieces of information about the localized service to the NEF by sending a parameter provision creation request (Nnef_ParameterProvision_Create Request) message or a parameter provision update request (Nef_ParameterProvision_Update Request) message to the NEF. It may be understood that, if a parameter has been created previously and the AF needs to update the parameter, the AF sends an update request message.

If the information about the localized service sent by the AF to the NEF is at a user granularity (or at a terminal device granularity, that is, the information about the localized service subscribed to by a user/terminal device), the message further includes a GPSI. The GPSI may be understood as an external identifier (for example, an external GPSI) of the UE. Optionally, the AF may send a GPSI list to the NEF, to indicate that the sent information about the localized service is related to the corresponding UE in the list.

If the information about the localized service sent by the AF to the NEF is at a service granularity or an application granularity, a terminal-related identifier such as the GPSI may be not included. In this case, the information may be understood as information about a localized service that can be provided by a service provider. In addition, in this case, the home network cannot learn of specific UEs that subscribe to the localized service, and therefore needs to perform S507 to S510 for learning. To be specific, if the message in S501 includes information about a terminal device/user that subscribes to the localized service (for example, includes identification information of one or more terminal devices or information about the user), S507 to S510 may be skipped. If the message in S501 does not include information about a terminal device/user that subscribes to the localized service, S507 to S510 may be performed to obtain the information about the terminal device/user that subscribes to the localized service.

S502: If the NEF has authorized the AF to provide a parameter, the NEF requests user data creation/update.

Specifically, the NEF sends a parameter provision creation/update request (Nudm_ParameterProvision_Create/Update Request) message to a UDM. The message includes the information about the localized service provided by the AF.

Optionally, the NEF maps the GPSI provided by the AF to an internally identifiable identifier (for example, an internal GPSI), and sends the internal identifier to the UDM.

Alternatively, if the AF is trusted, the AF may directly update the parameter for the UDM without using the NEF. In this case, the AF directly sends a parameter provision creation/update request (Nudm_ParameterProvision_Create/Update Request) message to the UDM. The message may include a SUPI (or a SUPI list) directly provided by the AF or the internally identifiable identifier (for example, the internal GPSI) and the information about the localized service in S501.

S503: Optionally, the UDM may read subscription data information from a UDR, to verify whether data to be updated is valid and authorize the update data.

In an implementation, the UDM reads the subscription data information by sending a data management query (Nudr_DM Query) message to the UDR.

S504: If the UDM authorizes the AF to provide user parameter information, the UDM maps the GPSI to a SUPI, and sends the information about the localized service to the UDR.

In an implementation, the UDM sends the information about the localized service to the UDR by sending a data management creation/update (Nudr_DM_Create/Update) message to the UDR.

S505: The UDM sends a response message (Nudm_ParameterProvision_Create/Update Response) to the NEF, to indicate that parameter update succeeds or fails. If a failure occurs, the message includes indication information indicating a failure cause.

S506: The NEF sends a response message (Nnef_ParameterProvision_Create/Update Response) to the AF, to indicate that the parameter update succeeds or fails. If the failure occurs, the message includes the indication information indicating the failure cause.

S507: Optionally, if the AF does not provide the information about the terminal device/user that subscribes to the localized service in S501, the UDM may send the information about the localized service to a RAN. Correspondingly, the RAN receives the information about the localized service from the UDM.

In a possible implementation, the UDM sends a non-UE N2 message transfer (Namf_Communication_NonUeN2MessageTransfer) message to the RAN, to indicate the RAN to broadcast the information about the localized service. The UDM may send a message to the RAN via an AMF, to indicate the RAN to broadcast the information about the localized service.

Alternatively, the UDM sends the information about the localized service to the UE via the AMF.

S508: The RAN broadcasts the information about the localized service to the UE within coverage based on an indication of the UDM (or the AMF).

Alternatively, the AMF sends the information about the localized service to the UE within the coverage based on the indication of the UDM.

S509: The UE that has subscribed to the localized service or the UE that requests to subscribe to the localized service may send a NAS message to the AMF. Correspondingly, the AMF receives the NAS message from the UE that has subscribed to the localized service or the UE that requests to subscribe to the localized service.

The NAS message includes information indicating that the UE requests to subscribe to or has subscribed to the localized service. For example, the information includes one or more of the following: the application identifier, the localized service identifier, identification information (for example, the SUPI) of the UE, and/or the like.

S510: The AMF sends, to the UDM, information indicating the localized service that the UE requests to subscribe to or has subscribed to.

In a possible implementation, the AMF sends, to the UDM via a UE context management update message (Nudm_UECM_Update), the information indicating the localized service that the UE requests to subscribe to or has subscribed to.

In another possible implementation, the AMF sends, to the UDM via a service data management information message (Nudm_SDM_Info), the information indicating the localized service that the UE requests to subscribe to or has subscribed to.

Through S501 to S510, the home network may learn that the UE subscribes to the localized service, or it may be understood as that the home network obtains the information about the localized service subscribed to by the UE, so that the home network can send an updated network selection list to the UE based on the information about the localized service subscribed to by the UE, and the UE can be switched to the hosting network at specified time or a specific location to obtain the localized service.

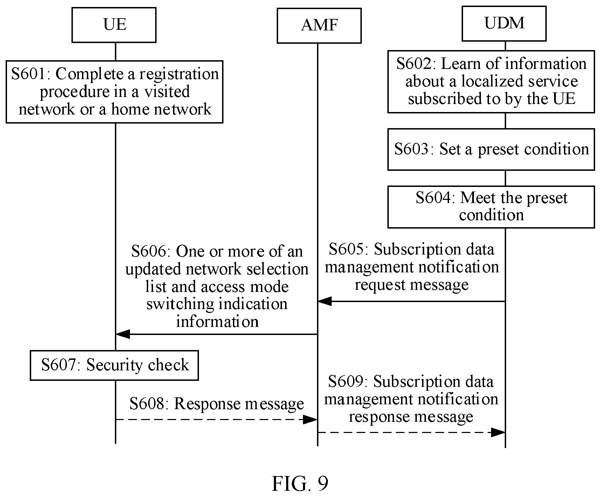

Based on the method shown in FIG. 6, FIG. 9 is a schematic flowchart of a network access method according to an embodiment of this application. The method includes the following steps.

S601: A UE completes a registration procedure in a visited network or a home network.

S602: The home network learns of information about a localized service (or may be referred to as information about a third-party service) subscribed to by the UE. For an obtaining manner, refer to the procedure in FIG. 8.

S603: The home network sets a preset condition (or performs a corresponding action) based on the information about the localized service subscribed to by the UE, to determine whether the UE meets the preset condition.

Specifically, the home network may set the preset condition in one or more of the following: the following four optional manners, to determine whether the UE meets the preset condition.

Manner 1 includes the following step.

S603 a: After obtaining the information about the localized service, a UDM obtains (or generates/updates) a network selection list based on the information about the localized service, and sets a timer based on the information about the localized service (for example, based on time information in the information about the localized service). When the timer expires, the UDM may update the network selection list for the UE.

In another optional manner, the UDM may update the network selection list only when the timer expires, and send an updated network selection list to the UE.

That a UDM updates a network selection list based on the information about the localized service may include: The UDM includes an identifier of a hosting network in the updated network selection list based on information about the hosting network included in the information about the localized service.

Manner 2 includes the following steps.

S603b-1: The UDM obtains the network selection list based on the information about the localized service, and obtains location information of the UE; or the UDM may obtain location information of the UE, and update the network selection list when the location information of the UE meets the preset condition.

The UDM may periodically perform S603b-2 and S603b-5 to periodically obtain the location information of the UE from an AMF. Alternatively, the UDM may subscribe to, from the AMF by performing S603b-3 to S603b-5, an event that the UE enters an area corresponding to the location information, and the AMF positions the UE based on the subscription. When the UE enters the area corresponding to the location information, the AMF sends an event notification message to the UDM.

S603b-2: The UDM sends a provide location information (Namf_ProvidePositioningInfo) message to the AMF, where the message may include an identifier of the UE, for example, a SUPI.

S603b-3: The UDM sends an event subscription (Namf_EventExposure_Subscribe) message to the AMF, where the message may include one or more of the following: the identifier (for example, the SUPI) of the UE, an event identifier, or the location information.

The event identifier indicates that a subscribed event is the event that the UE enters the area corresponding to the location information. The location information may be location information included in the information about the localized service, for example, a coordinate value, longitude and latitude, registration area information, a CAG ID, a GIN, a cell identifier, a tracking area identifier, a slice identifier, a network identifier, or a data network name, or may be location information generated by the UDM based on the information about the localized service. For example, the information about the localized service includes the coordinate value and/or the longitude and latitude, the UDM obtains, based on the coordinate values and/or the longitude and latitude, one or more of the following: a cell identifier, a CAG ID, a GIN, a tracking area identifier, a slice identifier, a network identifier, or a data network name corresponding to the coordinate values and/or the longitude and latitude. It may be understood that an area corresponding to one or more of the following: the cell identifier, the CAG ID, the GIN, the tracking area identifier, the slice identifier, the network identifier, and the data network name includes (or corresponds to) the coordinate value and/or the longitude and latitude.

S603b-4: The AMF, a location management function (location management function, LMF), a RAN, and the UE interact to perform UE positioning. After receiving the message sent in S603b-2 or S603b-3, the AMF initiates a related procedure for positioning the UE.

S604b-5: When the AMF learns that the UE enters the area corresponding to the location information, the AMF sends an event notification (Namf_EventExposure_Notify) message to the UDM. That is, the AMF notifies the UDM that the UE has entered the area corresponding to the location information.

Manner 3 includes the following steps.

S603c-1: The UDM obtains the network selection list based on the information about the localized service, and determines to send indication information to the AMF. The indication information indicates the AMF to update a registration area of the UE.

S603c-2: The UDM sends one or more of the following information: the identifier (for example, the SUPI) of the UE, registration area update indication information, or the location information to the AMF.

In an example, the UDM sends the location information to the AMF, that is, the location information may indicate the AMF to update the registration area of the UE. Alternatively, the UDM sends the location information and the registration area update indication information to the AMF, and the AMF updates the registration area of the UE based on the registration area update indication information. An updated registration area may be an area outside the area indicated by the location information.

S603c-3: The AMF updates the registration area of the UE based on the indication information sent by the UDM.

S603c-4: The AMF sends the updated registration area (updated registration area) to the UE.

In an implementation, the AMF sends a downlink NAS message to the UE, where the message includes the updated registration area.

S603c-5: When the UE moves out of the updated registration area, initiate mobility registration.

In this case, the home network (including the UDM) learns that the UE moves out of the updated registration area, that is, it is inferred that the UE enters the area corresponding to the location information in the information about the localized service.

Manner 4 includes the following steps.

S603d-1: The UDM obtains the network selection list based on the information about the localized service, and subscribes to an event (optionally, in a specific time period) that the UE listens to one or more of the following: a network identifier, a data network name, a slice identifier, a tracking area (tracking area, TA) identifier (TAI), a cell (cell) ID, a CAG ID, or a GIN of a specific network.

S603d-2: The UDM sends an event subscription (Namf_EventExposure_Subscribe) message to the AMF, where the message includes one or more of the following: the identifier (for example, the SUPI) of the UE, indication information, a network identifier (for example, a PLMN ID or a PLMN ID+NID), time information (start time and end time, or start time and duration), a data network name, a tracking area identifier (TAI or TAI list), a slice identifier (NSSAI or S-NSSAI), a cell identifier (Cell ID), a CAG ID, or a GIN. The indication information indicates that the UE needs to listen to (optionally, in the specific time period) the specific tracking area identifier, cell identifier, CAG ID, or GIN of the specific network (a network corresponding to the network identifier).

It should be noted that the indication information may be optionally, and one or more of the following: the network identifier (for example, the PLMN ID or the PLMN ID+NID), the time information (the start time and the end time, or the start time and the duration), the data network name, the tracking area identifier (the TAI or the TAI list), the slice identifier (the NSSAI or the S-NSSAI), the cell identifier (Cell ID), the CAG ID, or the GIN sent by the UDM to the AMF may (implicitly) indicate the event of listening to one or more of the foregoing described.

S603d-3: The AMF sends a message to the UE, where the message includes one or more of the following information: the identifier (for example, the SUPI) of the UE, the indication information, the network identifier (for example, the PLMN ID or the PLMN ID+NID), the time information (the start time and the end time, or the start time and the duration), the data network name, the tracking area identifier (the TAI or the TAI list), the cell identifier (Cell ID), the CAG ID, or the GIN. The indication information indicates that the UE needs to listen to (in the specific time period) the specific tracking area identifier, cell identifier, closed access group identifier, and group identifier for network selection of the specific network (the network corresponding to the network identifier).

In an implementation, the message is a downlink NAS message.

S603d-4: The UE listens to, based on the received message (optionally in the specific time period), a broadcast message of the network corresponding to the network identifier, where the broadcast message includes one or more of the following: the network identifier, the slice identifier, the data network name, the CAG ID, the GIN, the TAI, or the cell ID.

S603d-5: When the UE detects one or more of the following: the specific network identifier, slice identifier, data network name, CAG ID, GIN, TAI, or cell ID of the specific network, the UE sends a notification message to the AMF.

In an implementation, the notification message is an uplink NAS message.

S603d-6: The AMF sends a notification message (Namf_EventNotify) to the UDM, to notify the UDM that the UE has detected one or more of the following: the specific network identifier, slice identifier, data network name, CAG ID, GIN, TAI, or cell ID of the specific network.

S604: When the preset condition is met, that is, when the corresponding preset condition in the foregoing four possible implementations is met, the UDM sends the updated network selection list to the UE through S605 and S606.

It should be noted that, in Manner 1, that the preset condition is met is: When the timer expires, the UDM sends the updated network selection list to the UE. In Manner 2, when the UE enters the area corresponding to the location information, the UDM sends the updated network selection list to the UE. In Manner 3, when the UE moves out of the registration area, the UDM sends the updated network selection list to the UE, and the UDM may send the updated network selection list to the UE when the UE performs a mobility registration update procedure or after the UE performs the mobility registration update procedure. In Manner 4, when the UE (optionally, in the specific time period) detects one or more of the following: the specific network identifier, slice identifier, data network name, CAG ID, GIN, TAI, or cell ID of the specific network, the UDM sends the updated network selection list to the UE.

The updated network selection list may include the identifier of the hosting network, and the hosting network has a highest priority.

In a possible implementation, the updated network selection list is a special type of list, that is, when receiving the type of network selection list, the UE performs network selection. For example, the UE is in the home network. After receiving the special type of network selection list, the UE performs network selection based on the network selection list, without waiting for a roaming scenario.

In another possible implementation, the UDM sends, to the UE, the updated network selection list and indication information indicating UE access, and after receiving the updated network selection list and the indication information, the UE performs network selection. For example, the UE is in the home network. After receiving the indication information, the UE performs network selection based on the network selection list, without waiting for the roaming scenario.

S605: The UDM sends a subscription data management notification request (Nudm_SDM_Notification request) message to the AMF. Correspondingly, the AMF receives the subscription data management notification request message from the UDM. The message includes one or more of the following information: the updated network selection list, the identifier (for example, the SUPI) of the UE, or access mode switching indication information.

The access mode switching indication information indicates to switch an access mode. For example, when the hosting network is an NPN (for example, an SNPN), but the home or visited network of the UE is a PLMN, to enable the UE to listen to the hosting network or enable the UE to access the hosting network, the UE needs to be indicated to enter a non-public network access mode or exit a public network access mode. On the contrary, when the home or visited network of the UE is an NPN (for example, an SNPN), and the hosting network is a PLMN, the UE needs to be indicated to exit a non-public network access mode or enter a public network access mode.

S606: The AMF sends one or more of the updated network selection list and the access mode switching indication information to the UE. Correspondingly, the UE receives one or more of the updated network selection list and the access mode switching indication information.

In an implementation, the AMF sends a downlink NAS message to the UE, where the message includes one or more of the following: the updated network selection list and the access mode switching indication information.

S607: The UE performs security check on information about the updated network selection list.

For example, the UE performs integrity check on the information about the updated network selection list, and may determine whether the received information is complete or tampered with.

S608: Optionally, the UE sends a response message to the AMF. Correspondingly, the AMF receives the response message from the UE. The response message indicates that the updated network selection list has been received. The response message may be included in an uplink NAS message sent by the UE to the AMF.

S609: If S608 is performed, the AMF sends a subscription data management notification response message (Nudm_SDM _Notification response) to the UDM. Correspondingly, the UDM receives the subscription data management notification response message from the AMF, where the message includes the response sent by the UE in S608.

According to the method shown in FIG. 9, when the preset condition is met, the home network sends the updated network selection list to the UE, so that the updated network selection list can be valid at specific time and/or in a specific area, and the UE can access the hosting network at the specific time and/or in the specific area to obtain the localized service.

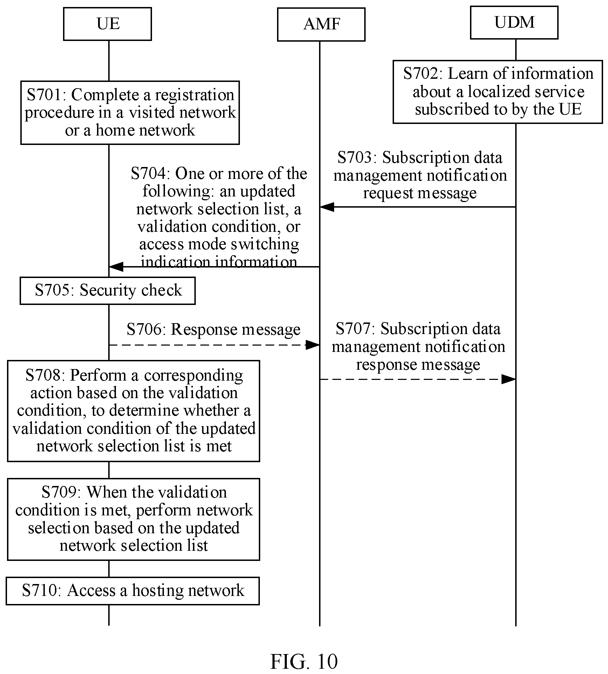

Based on the method shown in FIG. 7, FIG. 10 is a schematic flowchart of a network access method according to an embodiment of this application. The method includes the following steps.

S701: A UE completes a registration procedure in a visited network or a home network.

S702: The home network learns of information about a localized service (or may be referred to as information about a third-party service) subscribed to by the UE. For an obtaining manner, refer to the procedure in FIG. 8.

In an implementation, the home network (for example, a UDM) obtains (or generates/updates) a network selection list and a validation condition of the list based on the information about the localized service. The validation condition includes one or more of the following:
(1) Become valid at specific time or in a specific time period (for example, start time, or start time and end time, or start time and duration).
(2) Become valid in a specific area (for example, an area indicated by location information), where the location information may be information such as longitude and latitude and coordinates.
(3) Become valid when one or more of the following: a specific network identifier, a specific data network name, a specific slice identifier, a specific TAI, a specific cell ID, a specific CAG ID, or a specific GIN are detected.
(4) Become valid after a mobility registration update procedure is performed.

S703: The UDM sends a subscription data management notification request message (Nudm_SDM_Notification request) to an AMF, where the message includes one or more of the following information: an identifier (for example, a SUPI) of the UE, an updated network selection list, the validation condition, or access mode switching indication information.

The updated network selection list may include an identifier of a hosting network, and the hosting network has a highest priority.

The access mode switching indication information indicates to switch an access mode. For example, when the hosting network is an NPN (for example, an SNPN), but the home or visited network of the UE is a PLMN, to enable the UE to listen to the hosting network or enable the UE to access the hosting network, the UE needs to be indicated to enter a non-public network access mode (SNPN access mode) or exit a public network access mode (PLMN access mode). On the contrary, when the home or visited network of the UE is an NPN, and the hosting network is a PLMN, the UE needs to be indicated to exit a non-public network access mode or enter a public network access mode.

S704: The AMF sends one or more of the following: the updated network selection list, the validation condition, or the access mode switching indication information to the UE.

In a possible implementation, the AMF sends a downlink NAS message to the UE, where the message includes one or more of the following information: the updated network selection list, the validation condition, or the access mode switching indication information.

S705: The UE performs security check on information about the updated network selection list.

For example, the UE performs integrity check on the information about the updated network selection list, and may determine whether the received information is complete or tampered with.

S706: Optionally, the UE sends an uplink NAS message to the AMF, where the message includes a response message, and the response message indicates that the updated network selection list has been received.

S707: If the UE performs S706, the AMF sends a subscription data management notification response message (Nudm_SDM_Notification response) to the UDM, where the message includes the response sent by the UE.

S708: The UE performs a corresponding action based on the validation condition, to determine whether a validation condition of the updated network selection list is met.

Specifically, corresponding to different validation conditions, the UE performs the following actions to determine whether the validation condition of the updated network selection list is met.
(1) When the validation condition is to become valid at the specific time or in the specific time period (for example, the start time, or the start time and the end time, or the start time and the duration), the UE may set a timer or monitor time in real time based on the validation condition. When the timer expires, or when time reaches the specific time or reaches any moment in the time period, the updated network selection list becomes valid, and the UE may perform network selection based on the updated network selection list.
(2) When the validation condition is to become valid in the specific area (for example, the area indicated by the location information), where the location information may be the information such as the longitude and latitude and the coordinates. The UE obtains the location information through positioning. When the UE enters the specific area, the updated network selection list becomes valid.

In an implementation, the UE performs positioning by using a global positioning system (GPS). Specifically, S708b-1 is performed: The UE performs positioning by using the global positioning system (GPS). When the UE enters the area corresponding to the location information included in the validation condition, the updated network selection list becomes valid, and the UE may perform network selection based on the updated network selection list.

In another implementation, the UE initiates a positioning procedure, and performs location calculation through a core network. Specifically, the following steps are performed.

S708b-2: The UE sends a positioning request message to the AMF. Optionally, the UE sends the positioning request message to the AMF via an uplink NAS message.

S708b-3: The AMF, an LMF, a RAN, and the UE interact to complete positioning of the UE.

S708b-4: The AMF sends a positioning response message to the UE, where the message includes the location information of the UE. Optionally, the AMF sends a downlink NAS message to the UE, where the message includes the location information of the UE.

Optionally, if the validation condition includes time information, the UE may perform positioning in a specific time period.

(3) When the validation condition is that one or more of the following: the specific network identifier, the specific slice identifier, the specific data network name, the specific TAI, the specific cell ID, the specific CAG ID, or the specific GIN are detected, the UE may perform the following step.

S708c-1: The UE listens to a broadcast message based on the validation condition.

The broadcast message is a broadcast message of a specific network, for example, may be a broadcast message of a network corresponding to the network identifier (a PLMN ID or a PLMN ID+NID) included in the validation condition. The broadcast message may include one or more of the following: the network identifier, the slice identifier, the data network name, the TAI, the cell ID, the CAG ID, or the GIN. When the UE detects one or more of the following: the specific network identifier, the specific slice identifier, the specific data network name, the specific TAI, the specific cell ID, the specific CAG ID, or the specific GIN based on the validation condition, the updated network selection list becomes valid, and the UE may perform network selection based on the updated network selection list.

(4) When the validation condition is to become valid after the UE performs the mobility registration update procedure, the following steps are performed.

S708d-1: The UE updates a registration area based on the validation condition.

In an example, the UE updates, based on the location information of the service in the validation condition, the registration area to an area outside the area indicated by the location information, or the validation condition includes an updated registration area.

S708d-2: When the UE moves out of the registration area, initiate the mobility registration update procedure.

After the UE completes the mobility registration update procedure, the updated network selection list becomes valid, and the UE performs network selection based on the updated network selection list.

S709: When the validation condition of the updated network selection list is met, the UE may perform network selection based on the updated network selection list.

S710: The UE accesses the hosting network based on the updated network selection list.

In an example, the hosting network has the highest priority in the updated network selection list, so that the UE can access the hosting network during network selection.

According to the method shown in FIG. 10, the home network may obtain the updated network selection list based on the information about the localized service, and send the updated network selection list to the UE. In addition, the home network may further obtain the validation condition of the updated network selection list based on the information about the localized service, and send the validation condition to the UE. In this way, the updated network selection list becomes valid only when the validation condition is met, and the UE performs network selection based on the updated network selection list, to avoid a case in which the UE cannot obtain the localized service because the UE accesses the hosting network at inappropriate time or in an inappropriate area (for example, the localized service is not provided in the time period, or the hosting network cannot be accessed in the inappropriate area). In other words, the validation condition is sent to the UE, so that the UE may perform network selection to access the hosting network at the specific time and/or in the specific area, and therefore may obtain the localized service.

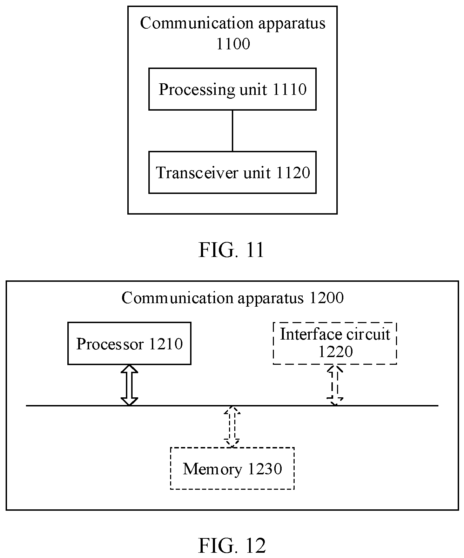

FIG. 11 and FIG. 12 each are a diagram of a possible structure of a communication apparatus according to an embodiment of this application. These communication apparatuses may be configured to implement functions of the network device or the terminal device in the foregoing method embodiments, and therefore can also implement beneficial effects of the foregoing method embodiments. In embodiments of this application, the communication apparatus may be a network device or a terminal device, or may be a module (for example, a chip) used in the network device or the terminal device.

As shown in FIG. 11, a communication apparatus 1100 includes a processing unit 1110 and an optional transceiver unit 1120. The communication apparatus 1100 is configured to implement functions of the network device or the terminal device in the foregoing method embodiments.

In a first embodiment, the communication apparatus is configured to perform an operation performed by the network device (for example, a UDM) in the foregoing method embodiments. The processing unit 1110 is configured to: obtain location information corresponding to a service subscribed to by a first terminal device; obtain a location of the first terminal device; and determine, based on the location of the first terminal device and the location information, that the first terminal device is located in an area indicated by the location information. The transceiver unit 1120 is configured to: when the first terminal device is located in the area indicated by the location information, send first indication information to the first terminal device, where the first indication information indicates to access a hosting network, and the hosting network is used to provide the first terminal device with a connection for obtaining the service.

Alternatively, the transceiver unit 1120 is configured to: receive second indication information, where the second indication information indicates that the first terminal device is located in an area indicated by location information corresponding to a service subscribed to by the first terminal device; and send first indication information to the first terminal device, where the first indication information indicates to access a hosting network, and the hosting network is used to provide the first terminal device with a connection for obtaining the service.

In a possible implementation method, the processing unit 1110 is further configured to send, to an access management function entity, a notification of subscribing to an event that the first terminal is located in the area indicated by the location information; and the transceiver unit 1120 is specifically configured to receive the second indication information from the access management function entity.

Alternatively, the transceiver unit 1120 is configured to: receive second indication information, where the second indication information indicates that the first terminal device leaves a first registration area, and the first registration area is an area outside an area indicated by location information corresponding to a service subscribed to by the first terminal device; and send first indication information to the first terminal device, where the first indication information indicates to access a hosting network, and the hosting network is used to provide the first terminal device with a connection for obtaining the service.

In a possible implementation method, the processing unit 1110 is further configured to subscribe to, from an access management function entity, a notification of an event that the first terminal device leaves the first registration area; and the transceiver unit 1120 is specifically configured to receive the second indication information from the access management function entity.

In a possible implementation, the transceiver unit 1120 is further configured to send the location information to the access management function entity, to update a registration area of the first terminal device based on the location information.

In a possible implementation, the processing unit 1110 is further configured to determine a first registration area based on the location information; and the transceiver unit 1120 is further configured to send the first registration area to the access management function entity, to update the registration area of the first terminal device.

Alternatively, the transceiver unit 1120 is configured to: receive second indication information, where the second indication information indicates that the first terminal device receives network information of an area indicated by location information, and the location information corresponds to a service subscribed to by the first terminal device; and send first indication information to the first terminal device, where the first indication information indicates to access a hosting network, and the hosting network is used to provide the first terminal device with a connection for obtaining the service.

In a possible implementation, the processing unit 1110 is further configured to subscribe to, from the access management function entity, a notification of an event that the first terminal device receives the network information; and the transceiver unit 1120 is specifically configured to receive the second indication information from the access management function entity.

In a possible implementation, the network information includes one or more of the following: a closed access group identifier, a group identifier for network selection, a cell identifier, a tracking area identifier, a slice identifier, a network identifier, or a data network name.

In a possible implementation, the location information includes one or more of the following: a coordinate value, longitude and latitude, the closed access group identifier, the group identifier for network selection, the cell identifier, the tracking area identifier, the slice identifier, the network identifier, or the data network name.

In a possible implementation, the processing unit 1110 is further configured to determine to be within time indicated by time information corresponding to the service.

In a possible implementation, the time information includes one or more of the following: a start moment, a time period, or an end moment of the service.

In a possible implementation, the transceiver unit 1120 is specifically configured to: send a first network selection list to the first terminal device, where the first network selection list includes the first indication information; or send a second network selection list and the first indication information to the first terminal device.

In a possible implementation, the first network selection list further includes an identifier of the hosting network, and the second network selection list includes the identifier of the hosting network.

In a possible implementation, the transceiver unit 1120 is further configured to: send third indication information to an access network device, where the third indication information indicates to broadcast an identifier of the service; and receive, from the access network device or the access management function entity, a list of terminal devices that subscribe to the service, where the list of terminal devices includes the first terminal device; and the processing unit 1110 is configured to determine, based on the list of terminal devices, that the first terminal device subscribes to the service.

In a possible implementation, if a home or visited network of the first terminal device is a public network and the hosting network is a standalone non-public network, the transceiver unit 1120 is further configured to send fourth indication information to the first terminal device, where the fourth indication information indicates to enter a non-public network access mode or exit a public network access mode; or if a home or visited network of the first terminal device is a standalone non-public network and the hosting network is a public network, the transceiver unit 1120 is further configured to send fifth indication information to the first terminal device, where the fifth indication information indicates to exit a non-public network access mode or enter a public network access mode.

In a second embodiment, the communication apparatus is configured to perform an operation performed by the terminal device in the foregoing method embodiments. The processing unit 1110 is configured to: obtain location information corresponding to a service subscribed to by the terminal device; and access a hosting network when the terminal device is located in an area indicated by the location information, where the hosting network is used to provide the terminal device with a connection for obtaining the service.

In a possible implementation, the processing unit 1110 is further configured to: obtain a location of the terminal device; and determine, based on the location of the terminal device and the location information, that the terminal device is located in the area indicated by the location information.

In a possible implementation, the processing unit 1110 is specifically configured to access the hosting network when the terminal device leaves a registration area, where the registration area is an area outside the area indicated by the location information.

In a possible implementation, the processing unit 1110 is specifically configured to access the hosting network when the terminal device receives network information of the area indicated by the location information.

In a possible implementation, the network information includes one or more of the following: a closed access group identifier, a group identifier for network selection, a cell identifier, a tracking area identifier, a slice identifier, a network identifier, or a data network name.

In a possible implementation, when the terminal device is located in the area indicated by the location information, there is coverage of a home network or a visited network corresponding to the terminal device in the area indicated by the location information.

In a possible implementation, the location information includes one or more of the following: a coordinate value, longitude and latitude, the closed access group identifier, the group identifier for network selection, the cell identifier, the tracking area identifier, the slice identifier, the network identifier, or the data network name.

In a possible implementation, the processing unit 1110 is further configured to obtain time information corresponding to the service; and is specifically configured to access the hosting network when the terminal device is located in the area indicated by the location information and is within time indicated by the time information.

In a possible implementation, the time information includes one or more of the following: a start moment, a time period, or an end moment of the service.

In a possible implementation, the transceiver unit 1120 is specifically used by the terminal device to receive the location information and indication information from a core network device, where the indication information indicates to access the hosting network when the terminal device is located in the area indicated by the location information.

In an example, when the communication apparatus 1100 is a terminal device, the terminal device may further include a power supply, configured to supply power to various components or circuits in the terminal device. In addition, the terminal device may further include one or more of the following: an input unit, a display unit, an audio circuit, a camera, a sensor, or the like. The audio circuit may further include a speaker, a microphone, and the like.

For more detailed descriptions about the processing unit 1110 and the transceiver unit 1120, directly refer to related descriptions in the foregoing method embodiments. Details are not described herein again.

As shown in FIG. 12, the communication apparatus 1200 includes a processor 1210. In an implementation method, the communication apparatus 1200 further includes an interface circuit 1220, and the processor 1210 and the interface circuit 1220 are coupled to each other. It may be understood that the interface circuit 1220 may be a transceiver or an input/output interface. In an implementation method, the communication apparatus 1200 may further include a memory 1230, configured to store instructions executed by the processor 1210, store input data required by the processor 1210 to run the instructions, or store data generated after the processor 1210 runs the instructions.

When the communication apparatus 1200 is configured to implement the foregoing method embodiments, the processor 1210 is configured to implement a function of the processing unit 1110, and the interface circuit 1220 is configured to implement a function of the transceiver unit 1120.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A network access method, comprising:
obtaining location information corresponding to a service subscribed to by a first terminal device;
obtaining a location of the first terminal device;
determine, based on the location of the first terminal device and the location information, that the first terminal device is located in an area indicated by the location information; and
sending first indication information to the first terminal device, wherein the first indication information indicates to access a hosting network, and the hosting network is used to provide the first terminal device with a connection for obtaining the service.

2. A network access method, comprising:
receiving second indication information, wherein the second indication information indicates that a first terminal device is located in an area indicated by location information corresponding to a service subscribed to by the first terminal device; and
sending first indication information to the first terminal device, wherein the first indication information indicates to access a hosting network, and the hosting network is used to provide the first terminal device with a connection for obtaining the service.

3. The method according to claim 2, further comprising: sending, to an access management function entity, a notification of subscribing to an event that the first terminal is located in the area indicated by the location information; and
the receiving second indication information comprises: receiving the second indication information from the access management function entity.

4. A network access method, comprising:
receiving second indication information, wherein the second indication information indicates that a first terminal device leaves a first registration area, and the first registration area is an area outside an area indicated by location information corresponding to a service subscribed to by the first terminal device; and
sending first indication information to the first terminal device, wherein the first indication information indicates to access a hosting network, and the hosting network is used to provide the first terminal device with a connection for obtaining the service.

5. The method according to claim 4, further comprising: subscribing to, from an access management function entity, a notification of an event that the first terminal device leaves the first registration area; and
the receiving second indication information comprises: receiving the second indication information from the access management function entity.

6. The method according to claim 4 or 5, further comprising:
sending the location information to the access management function entity, to update a registration area of the first terminal device based on the location information.

7. The method according to claim 4 or 5, further comprising:
determining the first registration area based on the location information; and
sending the first registration area to the access management function entity, to update a registration area of the first terminal device.

8. A network access method, comprising:
receiving second indication information, wherein the second indication information indicates that a first terminal device receives network information of an area indicated by location information, and the location information corresponds to a service subscribed to by the first terminal device; and
sending first indication information to the first terminal device, wherein the first indication information indicates to access a hosting network, and the hosting network is used to provide the first terminal device with a connection for obtaining the service.

9. The method according to claim 8, further comprising: subscribing to, from an access management function entity, a notification of an event that the first terminal device receives the network information; and
the receiving second indication information comprises: receiving the second indication information from the access management function entity.

10. The method according to claim 8 or 9, wherein the network information comprises one or more of the following: a closed access group identifier, a group identifier for network selection, a cell identifier, a tracking area identifier, a slice identifier, a network identifier, or a data network name.

11. The method according to any one of claims 1 to 10, wherein the location information comprises one or more of the following: a coordinate value, longitude and latitude, the closed access group identifier, the group identifier for network selection, the cell identifier, the tracking area identifier, the slice identifier, the network identifier, or the data network name.

12. The method according to any one of claims 1 to 11, wherein before the sending first indication information to the first terminal device, the method further comprises:
determining to be within time indicated by time information corresponding to the service.

13. The method according to claim 12, wherein the time information comprises one or more of the following: a start moment, a time period, or an end moment of the service.

14. The method according to any one of claims 1 to 13, wherein the sending first indication information to the first terminal device comprises:
sending a first network selection list to the first terminal device, wherein the first network selection list comprises the first indication information; or
sending a second network selection list and the first indication information to the first terminal device.

15. The method according to claim 14, wherein the first network selection list further comprises an identifier of the hosting network, and the second network selection list comprises the identifier of the hosting network.

16. The method according to any one of claims 1 to 15, further comprising:
sending third indication information to an access network device, wherein the third indication information indicates to broadcast an identifier of the service;
receiving, from the access network device or the access management function entity, a list of terminal devices that subscribe to the service, wherein the list of terminal devices comprises the first terminal device; and
determining, based on the list of terminal devices, that the first terminal device subscribes to the service.

17. The method according to any one of claims 1 to 16, further comprising:
if a home or visited network of the first terminal device is a public network and the hosting network is a standalone non-public network, sending fourth indication information to the first terminal device, wherein the fourth indication information indicates to enter a non-public network access mode or exit a public network access mode; or
if a home or visited network of the first terminal device is a standalone non-public network and the hosting network is a public network, sending fifth indication information to the first terminal device, wherein the fifth indication information indicates to exit a non-public network access mode or enter a public network access mode.

18. A network access method, comprising:
obtaining, by a terminal device, location information corresponding to a service subscribed to by the terminal device; and
accessing, by the terminal device, a hosting network when the terminal device is located in an area indicated by the location information, wherein the hosting network is used to provide the terminal device with a connection for obtaining the service.

19. The method according to claim 18, further comprising:
obtaining, by the terminal device, a location of the terminal device; and
determining, by the terminal device based on the location of the terminal device and the location information, that the terminal device is located in the area indicated by the location information.

20. The method according to claim 18, wherein the accessing, by the terminal device, a hosting network when the terminal device is located in an area indicated by the location information comprises:
accessing, by the terminal device, the hosting network when the terminal device leaves a registration area, wherein the registration area is an area outside the area indicated by the location information.

21. The method according to claim 18, wherein the accessing, by the terminal device, a hosting network when the terminal device is located in an area indicated by the location information comprises:
accessing, by the terminal device, the hosting network when the terminal device receives network information of the area indicated by the location information.

22. The method according to any one of claims 18 to 21, wherein the network information comprises one or more of the following: a closed access group identifier, a group identifier for network selection, a cell identifier, a tracking area identifier, a slice identifier, a network identifier, or a data network name.

23. The method according to any one of claims 18 to 22, wherein when the terminal device is located in the area indicated by the location information, there is coverage of a home network or a visited network corresponding to the terminal device in the area indicated by the location information.

24. The method according to any one of claims 18 to 23, wherein the location information comprises one or more of the following: a coordinate value, longitude and latitude, the closed access group identifier, the group identifier for network selection, the cell identifier, the tracking area identifier, the slice identifier, the network identifier, or the data network name.

25. The method according to any one of claims 18 to 24,
further comprising: obtaining time information corresponding to the service; and
the accessing, by the terminal device, a hosting network when the terminal device is located in an area indicated by the location information comprises: accessing, by the terminal device, the hosting network when the terminal device is located in the area indicated by the location information and is within time indicated by the time information.

26. The method according to claim 25, wherein the time information comprises one or more of the following: a start moment, a time period, or an end moment of the service.

27. The method according to any one of claims 18 to 26, wherein the obtaining, by a terminal device, location information corresponding to a service subscribed to by the terminal device comprises:
receiving, by the terminal device, the location information and indication information from a core network device, wherein the indication information indicates to access the hosting network when the terminal device is located in the area indicated by the location information.

28. A communication apparatus, comprising a processor and a memory, wherein the memory is configured to store computer-readable instructions, and the processor is configured to execute the computer-readable instructions stored in the memory, so that the apparatus performs the method according to any one of claims 1 to 17.

29. A communication apparatus, comprising a processor and a memory, wherein the memory is configured to store computer-readable instructions, and the processor is configured to execute the computer-readable instructions stored in the memory, so that the apparatus performs the method according to any one of claims 18 to 27.

30. The communication apparatus according to claim 29, wherein the communication apparatus is a terminal device.

31. A computer-readable storage medium, wherein the storage medium stores a computer-readable program or instructions, and when the computer program or instructions are executed by a communication apparatus, the method according to any one of claims 1 to 17 is performed, or the method according to any one of claims 18 to 27 is performed.
